# EUROPEAN PATENT SPECIFICATION

(11) **EP 3 971 429 B1**
(45) Date of publication and mention of the grant of the patent: **31.01.2024**
(21) Application number: 20805912.1
(22) Date of filing: 15.05.2020
(51) Int. Cl.: F16C 19/06, F16C 35/12, F16C 3/02, B21H 3/04, B21H 3/06, F16C 29/04, B21K 1/06

(54) **SHAFT MEMBER AND METHOD FOR MANUFACTURING MALE SHAFT**
WELLENELEMENT UND VERFAHREN ZUR HERSTELLUNG EINER INNENWELLE
ARBRE ET PROCÉDÉ DE FABRICATION D'ARBRE MÂLE

(30) Priority: 15.05.2019 JP 2019092097
(43) Date of publication of application: 23.03.2022
(73) Proprietor: NSK Ltd., Tokyo 141-8560 (JP)
(72) Inventor: SAITO Takeshi, Maebashi-shi, Gunma 371-0853 (JP)
(74) Representative: Mewburn Ellis LLP
(86) International application number: PCT/JP2020/019538
(87) International publication number: WO 2020/230898

(56) References cited:
- CN-C- 100 374 227
- JP-A- H07 164 087
- JP-A- H07 164 087
- JP-A- H07 171 648
- JP-A- 2004 130 504
- JP-A- 2014 043 905
- JP-B2- 4 367 833
- US-A1- 2016 076 575

## Description

### TECHNICAL FIELD

The present invention relates to a shaft member and a method for manufacturing a male shaft. For example, the shaft member has, on an outer peripheral surface thereof, a processing target portion for forming a male-side engagement portion such as a male screw portion. For example, in the method for manufacturing a male shaft, a male shaft is manufactured by rolling-processing a shaft member.

### BACKGROUND ART

In a machine tool or a position adjusting device of a steering wheel, a rotational motion of a drive source such as an electric motor is converted into a linear motion by a feed screw mechanism. As the feed screw mechanism, there are a slide screw type and a ball screw type.

A feed screw mechanism of a slide screw type includes a screw shaft and a nut.

An outer peripheral surface of the screw shaft has a male screw portion in which a male screw groove having a triangular or trapezoidal cross section is spirally formed. An inner peripheral surface of the nut has a female screw portion in which a female screw groove having a triangular or trapezoidal cross section is spirally formed. The feed screw mechanism is configured by screwing the male screw groove of the screw shaft and the female screw groove of the nut.

A feed screw mechanism of a ball screw type includes a screw shaft, a nut, and a plurality of balls.

An outer peripheral surface of the screw shaft has a male screw portion in which a male screw groove having an arc-shaped cross section is spirally formed. An inner peripheral surface of the nut has a female screw portion in which a female screw groove having an arc-shaped cross section is spirally formed. The plurality of balls are rollably disposed between the male screw groove of the screw shaft and the female screw groove of the nut.

Regardless of whether the feed screw mechanism is a feed screw mechanism of a slide screw type or a feed screw mechanism of a ball screw type, the male screw portion of the screw shaft configuring the feed screw mechanism can be formed by, for example, rolling processing.

JP-A-8-318340 (Patent Literature 1) describes a rolling machine for forming a male screw portion on an outer peripheral surface of a columnar metal material (workpiece material) by rolling processing. In the rolling machine, in a state where both axial end portions of the material are rotatably supported by jigs (center) each having a conical tip end portion, the material is sandwiched between a pair of round dies, the pair of round dies are pressed while being rotated, and thus the male screw portion is rolled on the outer peripheral surface of the material.

CN 100374227 C discloses a shaft member according the preamble of claim 1.

JP 2005074509 B2 discloses a similar shaft member having a step portion.

### CITATION LIST

### PATENT LITERATURE

Patent Literature 1: JP-A-8-318340

### SUMMARY OF INVENTION

### TECHNICAL PROBLEM

When the male screw portion is rolled on the outer peripheral surface of the material by using the rolling machine described in JP-A-8-318340, recessed holes each having a conical concave surface shape are formed in both axial end surfaces of the material. Then, it is necessary to position the material in a radial direction thereof by abutting conical tip end portions provided on the jig against inner peripheral surfaces of the recessed holes.

When the feed screw mechanism is incorporated into a structure in which another member is pressed by an axial end surface of the screw shaft, or when information for identifying a product is engraved on the axial end surface of the screw shaft, the axial end surface of the screw shaft is preferably a flat surface or a curved surface in which the recessed hole is not present. Therefore, a method of rolling a male screw portion on an outer peripheral surface of a columnar material in a state where tip end portions of a jig are abutted against inner peripheral surfaces of recessed holes formed in both axial end surfaces of the material to position the material in a radial direction thereof, and then cutting and removing an axial end portion of the material is considered.

However, when the axial end portion of the material is cut and removed, if the axial end portion of the material is cut in a state where the material is supported by gripping the male screw portion, the male screw portion may be deformed and the accuracy of the male screw portion may be reduced. That is, when the male screw portion of the screw shaft is gripped and a screw thread of the male screw portion is deformed so as to be recessed (a dent is formed), an inner surface of the screw groove is deformed so as to bulge (rise) accordingly. For example, when a feed screw mechanism of a ball screw type is configured by using a screw shaft in which such deformation occurs, the balls may ride on the bulging portion of the screw groove and the movement of the balls cannot be smoothly performed.

In order to prevent such deformation of the male screw portion, it is required to roll the male screw portion on the outer peripheral surface of the material in a state where the material is positioned in the radial direction thereof without forming recessed holes in the axial end surfaces of the material. Therefore, it is conceivable to support both axial end portions of the material by a jig having a recessed portion having a conical concave surface shape.

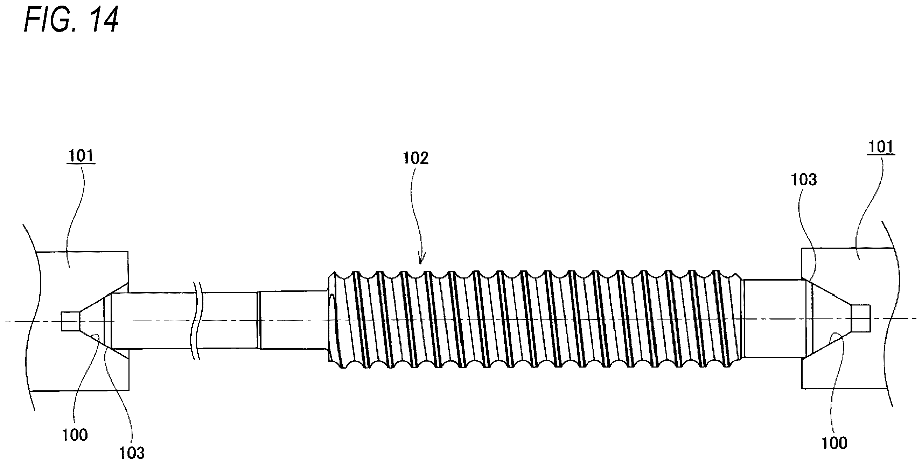

Specifically, as shown in FIG. 14, a pair of jigs 101, 101 each having a recessed portion 100 having a conical concave surface shape are supported on a frame of a processing apparatus (not shown). An inner peripheral surface of the recessed portion 100 of the jig 101 is abutted against a chamfered portion 103 of a columnar shaft member 102 that is formed at a connection portion between an axial end edge of an outer peripheral surface and an outer peripheral edge of an axial end surface of the shaft member 102, and thus the shaft member 102 is positioned in a radial direction thereof. In this state, when the outer peripheral surface of the shaft member 102 is pressed (sandwiched) from both radial sides by a pair of round dies rotating in the same direction, the shaft member 102 rotates while the chamfered portions 103 are in sliding contact with the inner peripheral surfaces of the recessed portions 100 of the jigs 101. As a result, a male screw portion is rolled on the outer peripheral surface of the shaft member 102. FIG. 14 shows a state after the male screw portion is formed on a processing target portion on the outer peripheral surface of the shaft member 102.

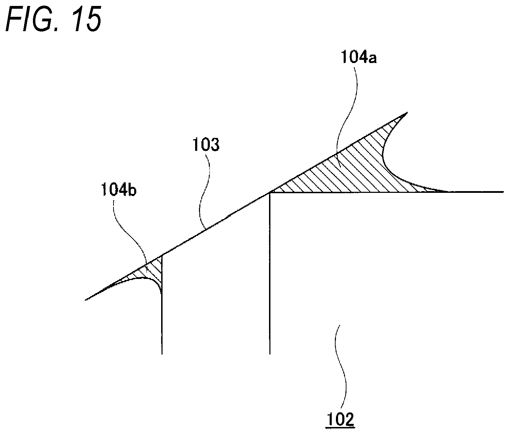

However, also in the above-described method, the following problem may occur. That is, in the method shown in FIG. 14, the chamfered portion 103 is a C-chamfered portion having a linear cross-sectional shape. Therefore, when the shaft member 102 is rotated in a state where the inner peripheral surface of the recessed portion 100 of the jig 101 is strongly pressed against the chamfered portion 103 in order to support both axial end portions of the shaft member 102, burr or protrusion excess portions 104a, 104b may be formed to protrude in the radial direction from the axial end edge of the outer peripheral surface of the shaft member 102, or may be formed to protrude in the axial direction from the outer peripheral edge of the axial end surface of the shaft member 102, as exaggeratedly shown in FIG. 15.

As a result, after the male screw portion is formed, an operation (processing) for removing the excess portions 104a, 104b is required, and the manufacturing cost is increased. In the example of FIG. 15, an amount of the excess portion 104a protruding in the radial direction from the axial end edge of the outer peripheral surface of the shaft member 102 is larger than an amount of the excess portion 104b protruding in the axial direction from the outer peripheral edge of the axial end surface of the shaft member 102. The amounts of the excess portions 104a, 104b vary depending on an outer diameter dimension of the shaft member 102, an inclination angle of a generatrix of the chamfered portion 103 with respect to a central axis of the shaft member 102, a surface area of the chamfered portion 103, and the like, and in general, the amount of the excess portion 104a protruding in the radial direction is substantially the same as the amount of the excess portion 104b protruding in the axial direction. However, when the outer diameter dimension of the shaft member 102 is relatively small, the amount of the excess portion 104b protruding in the axial direction may be larger than the amount of the excess portion 104a protruding in the radial direction.

In view of the above-described circumstances, an object of the present invention is to provide a structure of a shaft member in which the shape accuracy of a male-side engagement portion is good and the manufacturing cost can be reduced.

### SOLUTION TO PROBLEM

The above mentioned technical problem is solved by the shaft member according to claim 1, and also the manufacturing methods according to claims 15 and 16.

### ADVANTAGEOUS EFFECTS OF INVENTION

According to the present invention, deformation of the male-side engagement portion can be prevented, and the manufacturing cost can be reduced.

### BRIEF DESCRIPTION OF DRAWINGS

FIG. 1A is a side view showing a shaft member according to a first embodiment of the present invention, and FIG. 1B is a male shaft manufactured by rolling a processing target portion of the shaft member.
FIG. 2 is an enlarged view of a portion A in FIG. 1(A), and showing the shaft member that is taken out.
FIG. 3 is an enlarged view of a portion B in FIG. 1(A), and showing the shaft member that is taken out.
FIG. 4A to FIG. 4E are side views showing a method for manufacturing the shaft member according to the first embodiment of the present invention.
FIG. 5 is a cross-sectional view taken along a line C-C of FIG. 4(C).
FIG. 6A and FIG. 6B are cross-sectional views showing another example of a method of forming a male screw portion by rolling processing.
FIG. 7 is a side view showing a method of measuring an amount of runout of the shaft member.
FIG. 8 is a view corresponding to FIG. 2 and showing a shaft member according to a second embodiment of the present invention.
FIG. 9 is a view corresponding to FIG. 2 and showing a shaft member according to a third embodiment of the present invention.
FIG. 10 is a view corresponding to FIG. 2 and showing a shaft member according to a fourth embodiment of the present invention.
FIG. 11 is a side view showing a shaft member according to a fifth embodiment of the present invention.
FIG. 12 is an enlarged view of a portion D in FIG. 11.
FIG. 13 is a side view showing a shaft member according to a sixth embodiment of the present invention.
FIG. 14 is a side view illustrating a method of rolling a male screw portion on an outer peripheral surface of a columnar material.
FIG. 15 is a partially enlarged view illustrating a problem of the method of rolling a male screw portion on an outer peripheral surface of a columnar material.
FIG. 16 is a cross-sectional view of a main part for a brake actuator including the shaft member of the first embodiment.

### DESCRIPTION OF EMBODIMENTS

### [First Embodiment]

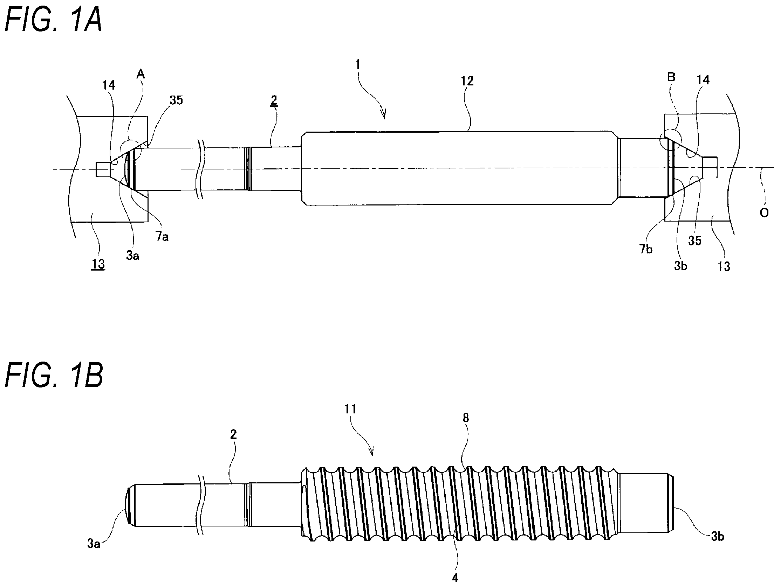

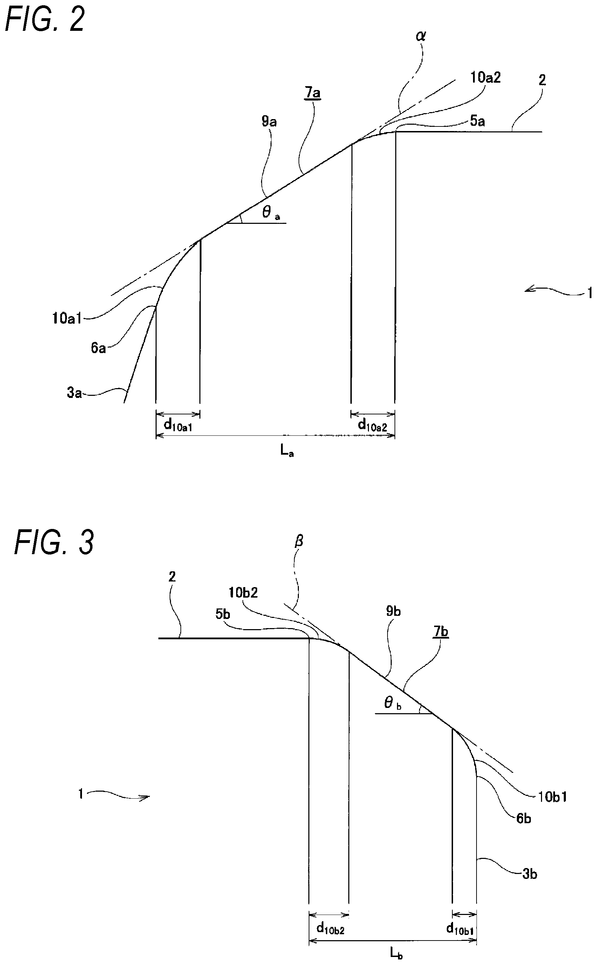

FIGS. 1A to 5 show a first embodiment of the present invention. A male shaft 11 serving as a target of the present embodiment is a ball screw shaft configuring a feed screw mechanism of a ball screw type. The male shaft 11 includes an outer peripheral surface 2, first and second end surfaces 3a and 3b on both axial sides, and a male screw portion 4 that is a male-side engagement portion.

Both of the first and second end surfaces 3a, 3b on both axial sides do not have recessed holes that is opened in the first and second end surfaces 3a, 3b.

In the present embodiment, the first end surface 3a on one axial side (a left side in FIGS. 1A and 1B) is configured by a single convex curved surface having a partially spherical shape.

The second end surface 3b on the other axial side (a right side in FIGS. 1A and 1B) is configured by a flat surface orthogonal to a central axis of the male shaft 11.

In the male screw portion 4, a male screw groove 8 having an arc-shaped cross section is formed spirally in an axially intermediate portion of the outer peripheral surface 2 of the male shaft 11.

The feed screw mechanism of a ball screw type is configured by assembling the male shaft 11, a ball nut (not shown) having a female screw portion in which a female screw groove having an arc-shaped cross section is formed spirally on an inner peripheral surface of the ball nut, and a plurality of balls (not shown). That is, the ball nut is disposed around the male screw portion 4 of the male shaft 11, and the balls are rollably disposed between the male screw groove 8 and the female screw groove of the ball nut, thereby configuring the feed screw mechanism.

The male shaft 11 is obtained by rolling a processing target portion 12 of the shaft member 1 as shown in FIG. 1A. The shaft member 1 includes the outer peripheral surface 2, first and second end surfaces 3a and 3b on both axial sides, the processing target portion 12, and first and second chamfered portions 7a, 7b. The first and second chamfered portions 7a, 7b are respectively formed at connection portions between first and second end edges 5a and 5b on both axial sides of the outer peripheral surface 2 and first and second outer peripheral edges 6a, 6b of the first and second end surfaces 3a, 3b on both axial sides.

The processing target portion 12 is disposed at the axially intermediate portion of the outer peripheral surface 2. An outer diameter dimension of the processing target portion 12 is larger than outer diameter dimensions of portions adjacent thereto on both axial sides.

Each of the first and second chamfered portions 7a, 7b is a composite surface formed by combining three or more surfaces. In the composite surface, axially adjacent surfaces are different in an inclination angle or a curvature radius of a generatrix of the surface with respect to a central axis O of the shaft member 1.

The first and second chamfered portions 7a, 7b respectively include first and second supported surface portions 9a, 9b which are respectively disposed at axially intermediate portions of the first and second chamfered portions 7a, 7b and are each inclined radially toward as approaching the male screw portion 4 in the axial direction. In the present embodiment, each of the first and second supported surface portions 9a, 9b is a conical surface having a linear generatrix. In addition, in a cross section in the axial direction (a cross section including the central axis O of the shaft member 1), the first and second end edges 5a, 5b of the outer peripheral surface 2 and the first and second outer peripheral edges 6a, 6b of the first and second end surfaces 3a, 3b on both axial sides are located radially inward than generatrices (including an extension line of the generatrix) α, β of the first and second supported surface portions 9a, 9b. That is, in the cross section in the axial direction (the cross section including the central axis O of the shaft member 1), the first and second end edges 5a, 5b of the outer peripheral surface 2 and the first and second outer peripheral edges 6a, 6b of the first and second end surfaces 3a, 3b on both axial sides are located radially inward than tangent lines at axially intermediate portions of the first and second supported surface portions 9a, 9b.

For this reason, in the present embodiment, in the first and second chamfered portions 7a, 7b, the first chamfered portion 7a on the one axial side which is formed at the connection portion between the first end edge 5a on the one axial side of the outer peripheral surface 2 and the first outer peripheral edge 6a of the first end surface 3a on the one axial side, includes the first supported surface portion 9a and a pair of connection inclined surface portions 10a1, 10a2.

The first supported surface portion 9a is a conical surface that is disposed at an axially intermediate portion of the first chamfered portion 7a on the one axial side and has a linear generatrix inclined radially outward as approaching the other axial side. An inclination angle θa of the generatrix of the first supported surface portion 9a with respect to the central axis O of the shaft member 1 is preferably 20° or more and 60° or less, and is about 30° in the illustrated example.

In the pair of connection inclined surface portions 10a1, 10a2, the connection inclined surface portion 10a1 on the one axial side, that connects the first outer peripheral edge 6a of the first end surface 3a on the one axial side and an end edge on the one axial side of the first supported surface portion 9a, is a convex curved surface having an arc-shaped generatrix inclined radially outward as approaching the other axial side.

In the pair of connection inclined surface portions 10a1, 10a2, the connection inclined surface portion 10a2 on the other axial side, that connects an end edge on the other axial side of the first supported surface portion 9a and the first end edge 5a on the one axial side of the outer peripheral surface 2, is a convex curved surface having an arc-shaped generatrix inclined radially outward as approaching the other axial side.

Each of axial dimensions d10a1, d10a2 of the connection inclined surface portions 10a1, 10a2 is preferably 10% or more and 35% or less of an axial dimension La of the entire first chamfered portion 7a. Each of curvature radiuses of the generatrices of the connection inclined surface portions 10a1, 10a2 is preferably 1% or more and 30% or less of an outer diameter dimension of a portion of the shaft member 1 adjacent to the other axial side of the connection inclined surface portion 10a2 (an outer diameter dimension of the first end edge 5a on the one axial side of the outer peripheral surface 2).

In the first and second chamfered portions 7a, 7b, the second chamfered portion 7b on the other axial side, that connects the second end edge 5b on the other axial side of the outer peripheral surface 2 and the second outer peripheral edge 6b of the second end surface 3b on the other axial side, includes the second supported surface portion 9b and a pair of connection inclined surface portions 10b 1, 10b2.

The second supported surface portion 9b is a conical surface that is disposed at an axially intermediate portion of the second chamfered portion 7b on the other axial side and has a linear generatrix inclined radially outward as approaching the one axial side. An inclination angle θb of the generatrix of the second supported surface portion 9b with respect to the central axis O of the shaft member 1 is preferably 20° or more and 60° or less, and is about 30° in the illustrated example.

In the pair of connection inclined surface portions 10a1, 10a2, the connection inclined surface portion 10b1 on the other axial side, that connects the second outer peripheral edge 6b of the second end surface 3b on the other axial side and an end edge on the other axial side of the second supported surface portion 9b, is a convex curved surface having an arc-shaped generatrix inclined radially outward as approaching the one axial side. In the pair of connection inclined surface portions 10b1, 10b2, the connection inclined surface portion 10b2 on the one axial side, that connects an end edge on the one axial side of the second supported surface portion 9b and the second end edge 5b on the other axial side of the outer peripheral surface 2, is a convex curved surface having an arc-shaped generatrix inclined radially outward as approaching the one axial side. Each of axial dimensions d10b1, d10b2 of the connection inclined surface portions 10b1, 10b2 is preferably 10% or more and 35% or less of an axial dimension Lb of the entire second chamfered portion 7b. Each of curvature radiuses of the generatrices of the connection inclined surface portions 10a1, 10a2 is preferably 1% or more and 30% or less of an outer diameter dimension of a portion of the shaft member 1 adjacent to the one axial side of the connection inclined surface portion 10b2 (an outer diameter dimension of the second end edge 5a on the other axial side of the outer peripheral surface 2).

In this way, the pair of connection inclined surface portions 10a1, 10a2 of the first end surface 3a and the pair of connection inclined surface portions 10b 1, 10b2 of the second end surface 3b are each set into a gentle R shape, and thus elongation is absorbed by the connection inclined surface portions 10a1, 10a2, 10b 1, 10b2 at the time of the rolling processing, and the male shaft 11 can be prevented from extending in the axial direction. The first end surface 3a and the second end surface 3b may have any shape, and can have a shape capable of absorbing the axial elongation of the male shaft 11 at the time of the rolling processing.

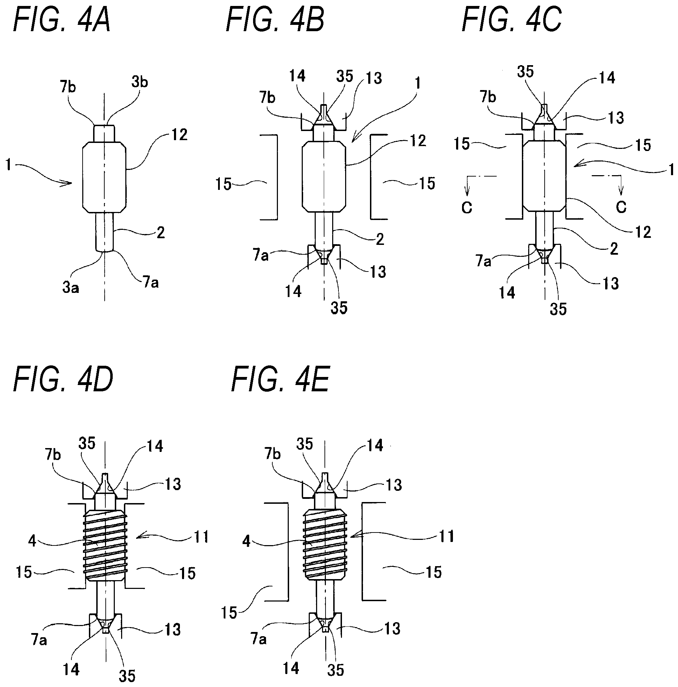

As to be described later, before the rolling processing (FIG. 4B to FIG. 4D) is performed, cutting processing such as cutting or grinding is performed on the columnar material, and the shaft member 1 as shown in FIG. 4A is obtained. When the columnar material is processed into the shaft member 1, the first and second chamfered portions 7a, 7b are formed. Therefore, since the connection inclined surface portions 10a1, 10a2, 10b 1, 10b2 are formed on the first end surface 3a and the second end surface 3b in advance before the rolling processing, elongation can be absorbed by the connection inclined surface portions 10a1, 10a2, 10b1, 10b2 at the time of the rolling processing performed thereafter.

Next, a method for manufacturing the male shaft 11 from the shaft member 1 of the present embodiment will be described with reference to FIGS. 4A to 5.

First, the columnar material is obtained by cutting a bar-shaped material, which is made of an iron-based metal such as carbon steel or chromium-molybdenum steel and has a circular cross-sectional shape, into a predetermined length. Next, cutting processing such as cutting and grinding is performed on the material, and the shaft member 1 as shown in FIG. 4A is obtained. When the columnar material is processed into the shaft member 1, the first and second chamfered portions 7a, 7b are formed at the connection portions between the outer peripheral surface 2 and the first and second end surfaces 3a, 3b on both axial sides. Thereafter, as shown in FIGS. 4B to 4D, during the rolling processing for forming the male screw portion 4, the outer peripheral surface 2 and the first and second end surfaces 3a, 3b are finished in a state where the shaft member 1 is positioned in the radial direction by pressing tapered surfaces provided on the inner peripheral surfaces of the recessed portions 14 of the jigs 13 against the first and second supported surface portions 9a, 9b of the first and second chamfered portions 7a, 7b.

Next, the male shaft 11 is to be obtained by performing the rolling processing on the processing target portion 12 of the shaft member 1 and forming the male screw portion 4. For this purpose, first, as shown in FIG. 4B, both axial end portions of the shaft member 1 are supported by the pair of jigs 13 each having the recessed portion 14. A generatrix of a tapered surface 35 provided on the inner peripheral surface of each recessed portion 14 of the jig 13 is linearly inclined in a direction in which an inner diameter dimension of the tapered surface 35 increases as approaching an opening of the recessed portion 14. An inclination angle ϕ of a generatrix of the tapered surface 35 with respect to the central axis O is the same as the inclination angles θa, θb of the first and second supported surface portions 9a, 9b of the first and second chamfered portions 7a, 7b of the shaft member 1. Therefore, in a state where the tapered surfaces 35 are abutted against (pressed against) the first and second supported surface portions 9a, 9b, the first and second end edges 5a, 5b on both axial sides of the outer peripheral surface 2 of the shaft member 1 and the first and second outer peripheral edges 6a, 6b of the first and second end surfaces 3a, 3b are not in contact with the tapered surfaces 35.

The jig 13 may be made of, for example, an iron-based metal such as high-speed steel. Alternatively, (i) a portion including at least the tapered surface 35 of the jig 13 is made of cemented carbide or polycrystalline diamond, and/or (ii) mirror finishing is performed on the tapered surface 35, thus frictional resistance with respect to the first and second supported surface portions 9a, 9b can be reduced, and wear of the tapered surface 35 can be prevented. In addition, as a method of preventing the wear of the tapered surface 35 while reducing the cost, a coating layer can also be formed on the tapered surface 35 by a chemical vapor deposition method (CVD), a high-temperature salt bath treatment method (TD method, TD-VC method), or the like. During forming of the male screw portion 4, it is preferable to supply a lubricant or air for lubrication and cooling to sliding contact portions between the tapered surfaces 35 and the first and second supported surface portions 9a, 9b. When a main body portion of the jig 13 and a portion including the tapered surface 35 are made of different materials, adhesiveness between a material forming the main body portion of the jig 13 and a material forming the portion including the tapered surface 35 can be improved by forming a vent hole in the jig 13.

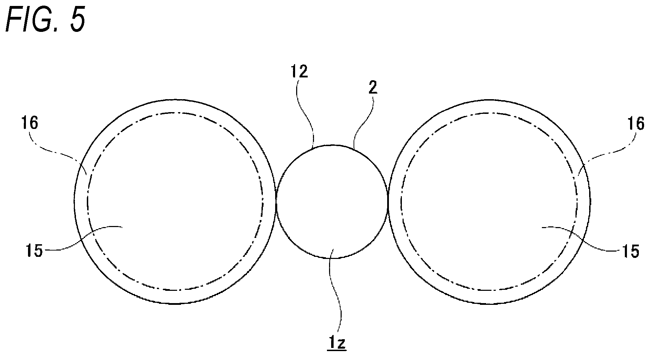

As described above, in a state where both axial end portions of the shaft member 1 are supported by the pair of jigs 13, the pair of round dies 15 approach the shaft member 1 from both radial sides while being rotated. Each of the pair of round dies 15 has screw cutting teeth (not shown) formed spirally on an outer peripheral surface thereof. Therefore, as shown in FIGS. 4C and 5, when the shaft member 1 is pressed between the pair of round dies 15 from both radial sides, the shaft member 1 rotates while the first and second supported surface portions 9a, 9b are in sliding contact with the tapered surfaces 35 provided on the inner peripheral surfaces of the recessed portions 14 of the jigs 13. As a result, as shown in FIG. 4D, the male screw portion 4 formed by spirally forming the male screw groove 8 is rolled on the processing target portion 12 of the shaft member 1. Thereafter, as shown in FIG. 4E, the male shaft 11 including the male screw portion 4 is taken out by retracting the pair of round dies 15 in the radial direction and further retracting the pair of jigs 13 in the axial direction. Washing, finishing, a heat treatment, and the like are performed on the male shaft 11 obtained in this way as necessary so as to make the male shaft 11 into a finished shape. That is, in a rolling step in the present embodiment, since burr or protrusion excess portion 104a, 104b (to be described later) with a small thickness can be prevented from being formed on the shaft member 1, it is not necessary to further perform processing (polishing processing or the like) after the heat treatment, and the heat treatment can be set as a final step in the method for manufacturing the male shaft 11. For example, when polishing processing or the like is performed on the male shaft 11 after heat treatment as in the related art, a very fine scratch may be generated on a ball rolling surface. However, since the heat treatment is the final step in the present embodiment, such a disadvantage can be solved.

In the present embodiment, when the male screw portion 4 is formed by the rolling processing, the tapered surfaces 35 provided on the inner peripheral surfaces of the recessed portions 14 of the pair of jigs 13 are pressed against the first and second supported surface portions 9a, 9b of the first and second chamfered portions 7a, 7b so as to position the shaft member 1 in the radial direction. That is, according to the method for manufacturing the shaft member 1 of the present embodiment, unlike the case of rolling the male screw portion on the outer peripheral surface of the material using a rolling machine described in JP-A-8-318340, it is not necessary to form the recessed holes for abutting the conical tip end portions provided in the jigs against the end surfaces on both axial sides of the material. Therefore, according to the manufacturing method of the present embodiment, after the male screw portion is formed on the outer peripheral surface of the material, it is not necessary to cut and remove the axial end portions of the material in a state where the material is supported by gripping the male screw portion. In short, according to the manufacturing method of the present embodiment, the male screw portion 4 can be prevented from being deformed, and the shape accuracy of the male screw portion 4 can be satisfactorily secured.

Further, in the present embodiment, the both axial end portions of the shaft member 1 are supported by pressing the tapered surfaces 35 provided on the inner peripheral surfaces of the recessed portions 14 of the pair of jigs 13 against the first and second chamfered portions 7a, 7b respectively formed at the connection portions between the first and second end edges 5a, 5b on both axial sides of the outer peripheral surface 2 and the first and second outer peripheral edges 6a, 6b of the first and second end surfaces 3a, 3b on both axial sides. Therefore, deformation in a bending direction can be less likely to occur (buckling deformation can be less likely to occur) even when a force in the axial direction is applied, as compared with a structure in which both axial end portions of the material are supported by abutting the conical tip end portions provided in the jigs against the inner peripheral surfaces of the recessed holes formed in the both axial end surfaces of the material, as in the method described in JP-A-8-318340. From this viewpoint as well, the shape accuracy of the male screw portion 4 can be satisfactorily secured.

In the shaft member 1 of the present embodiment, the first and second end edges 5a, 5b of the outer peripheral surface 2 and the first and second outer peripheral edges 6a, 6b of the first and second end surfaces 3a, 3b are located radially inward than the generatrices α, β of the first and second supported surface portions 9a, 9b in the cross section in the axial direction. Therefore, in a state where the tapered surfaces 35 provided on the inner peripheral surfaces of the recessed portions 14 of the pair of jigs 13 are pressed against the first and second supported surface portions 9a, 9b of the first and second chamfered portions 7a, 7b, the first and second end edges 5a, 5b of the outer peripheral surface 2 of the shaft member 1 and the first and second outer peripheral edges 6a, 6b of the first and second end surfaces 3a, 3b are not in contact with the tapered surfaces 35. Therefore, even if the shaft member 1 is deformed as the tapered surfaces 35 provided on the inner peripheral surfaces of the recessed portions 14 of the jigs 13 are strongly pressed against the first and second supported surface portions 9a, 9b of the first and second chamfered portions 7a, 7b when the male screw portion 4 is rolled, the deformation can be retained in the connection inclined surface portions 10a1, 10a2, 10b 1, 10b2 adjacent to the supported surface portions 9a, 9b in the axial direction. In other words, the deformation of the shaft member 1 can be reduced to such an extent that the connection inclined surface portions 10a1, 10a2, 10b1, 10b2 slightly bulge outward in the radial direction. In short, according to the manufacturing method of the present embodiment, the burr or protrusion excess portions 104a, 104b with a small thickness as shown in FIG. 15 can be prevented from being formed. In particular, in the present embodiment, since the connection inclined surface portions 10a1, 10a2, 10b1, 10b2 are disposed on both axial sides of the first and second supported surface portions 9a, 9b, it is possible to prevent both the formation of the excess portion 104a protruding in the radial direction from the axial end edge of the outer peripheral surface and the formation of the excess portion 104b protruding in the axial direction from the outer peripheral edge of the axial end surface. Therefore, it is not necessary to perform an operation (processing) of removing the excess portions 104a, 104b after the male screw portion 4 is formed, and the manufacturing cost of the male shaft 11 can be reduced.

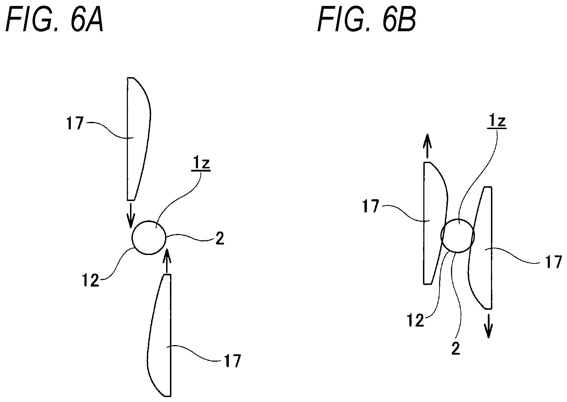

In the present embodiment, the male screw portion 4 is rolled by pressing the outer peripheral surface of the shaft member 1 from both radial sides between the pair of round dies 15 having the spiral screw cutting teeth 16 (not shown in FIGS. 4B to 4E, and shown in FIG. 5 only). However, the method of forming the male screw portion 4 is not particularly limited as long as the shaft member 1 is positioned in the radial direction by pressing the tapered surfaces 35 provided on the inner peripheral surfaces of the recessed portions 14 of the jigs 13 against the first and second supported surface portions 9a, 9b of the first and second chamfered portions 7a, 7b. For example, as shown in FIGS. 6A and 6B, the male screw portion 4 can be rolled by moving a pair of flat dies 17, that are disposed to face each other, toward or away from each other. Alternatively, the male screw portion 4 may be formed by processing other than the rolling processing (for example, cutting processing or the like). However, in this case, one end portion of the shaft member 1 needs to be gripped (chucked) by a rotation drive mechanism.

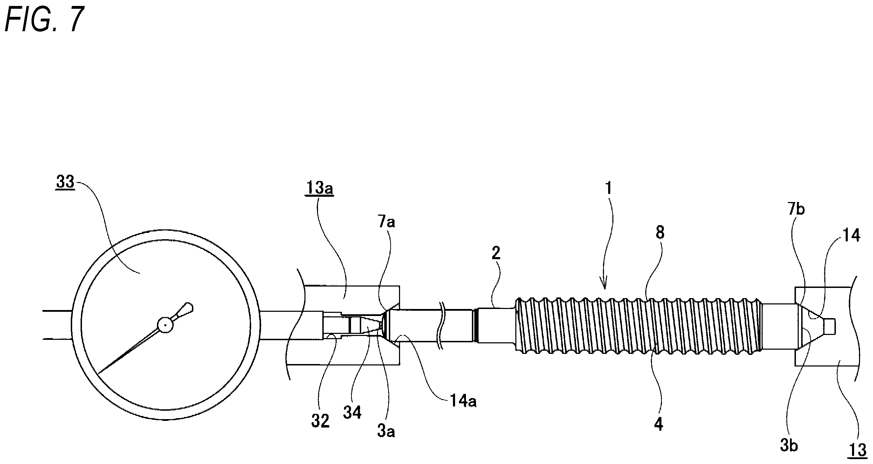

Further, the case of carrying out the method for manufacturing the male shaft of the present invention can be configured such that, as shown in FIG. 7, a through hole 32 is formed in the jig 13a to open a bottom surface of the recessed portion 14a, and during the processing of the male screw portion 4, center runout of the shaft member 1 is measured by abutting a tip end portion of a probe 34 of a dial gauge 33 against the first end surface 3a on the one axial side of the shaft member 1 through the through hole 32. FIG. 7 shows the shaft member 1 in a state after the male screw portion 4 is formed. The center runout of the shaft member 1 may be configured to be measured by abutting the tip end portion of the probe 34 of the dial gauge 33 against the second end surface 3b on the other axial side of the shaft member 1.

Further, in the present embodiment, the male shaft 11 is used as a ball screw shaft configuring a feed screw mechanism of a ball screw type, and the male screw portion 4 in which the male screw groove 8 having an arc-shaped cross-sectional shape is spirally formed is formed on the outer peripheral surface 2, but the present invention is not limited to such a structure. Specifically, for example, the male shaft to which the present invention is applied can be applied to a screw shaft configuring a feed screw mechanism of a slide screw type. In this case, the male-side engagement portion provided on the outer peripheral surface is a male screw portion in which a male screw groove having a substantially trapezoidal or triangular cross-sectional shape is formed spirally. Alternatively, the male shaft to which the present invention is applied can be an inner shaft, and the male-side engagement portion can be a male spline portion or a male serration portion formed on the outer peripheral surface.

### [Second Embodiment]

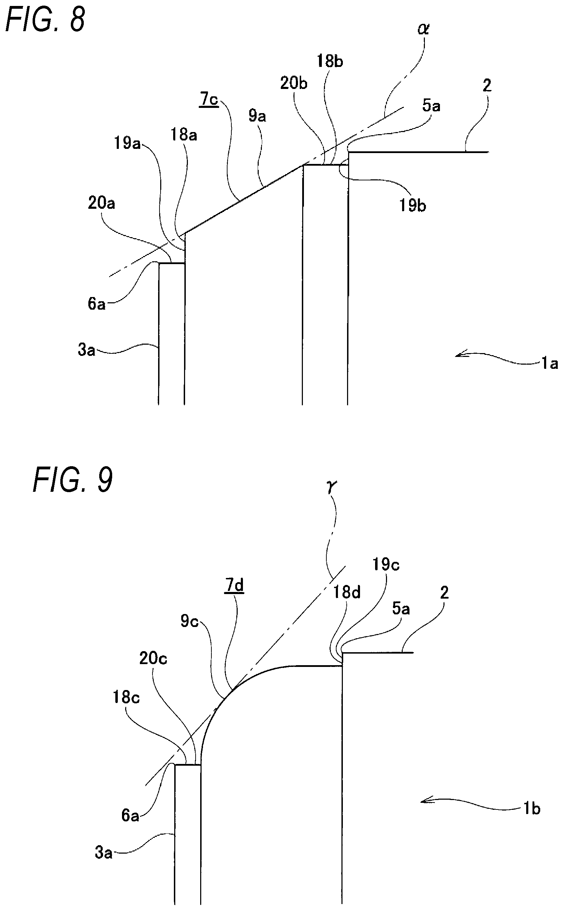

FIG. 8 shows a second embodiment of the present invention. A shaft member 1a of the present embodiment includes a chamfered portion 7c at the connection portion between the first end edge 5a on the one axial side of the outer peripheral surface 2 and the first outer peripheral edge 6a of the first end surface 3a on the one axial side. In a cross section in the axial direction, the first end edge 5a of the outer peripheral surface 2 and the first outer peripheral edge 6a of the first end surface 3a are located radially inward than the generatrix (including an extension line of the generatrix) α of the first supported surface portion 9a disposed at an axially intermediate portion of the chamfered portion 7c. Therefore, the chamfered portion 7c includes a first supported surface portion 9a and a pair of step portions 18a, 18b.

The first supported surface portion 9a is a conical surface that is disposed at an axially intermediate portion of the first chamfered portion 7c and has a linear generatrix inclined radially outward as approaching the other axial side.

In the pair of step portions 18a, 18b, the step portion 18a on the one axial side connects the first outer peripheral edge 6a of the first end surface 3a and an end edge on the one axial side of the first supported surface portion 9a. The step portion 18a includes a circular ring-shaped flat surface portion 19a that is bent radially inward from the end edge on the one axial side of the first supported surface portion 9a, and a cylindrical surface portion 20a which is bent toward the one axial side from an inner peripheral edge of the flat surface portion 19a, and whose end edge on the one axial side is connected to the first outer peripheral edge 6a of the first end surface 3a.

In the pair of step portions 18a, 18b, the step portion 18b on the other axial side connects an end edge on the other axial side of the first supported surface portion 9a and the first end edge 5a on the one axial side of the outer peripheral surface 2. The step portion 18b includes a circular ring-shaped flat surface portion 19b that is bent radially inward from the first end edge 5a on the one axial side of the outer peripheral surface 2, and a cylindrical surface portion 20b which is bent toward the one axial side from an inner peripheral edge of the flat surface portion 19b, and whose end edge on the one axial side is connected to the end edge on the other axial side of the first supported surface portion 9a.

In the present embodiment, the first end edge 5a on the one axial side of the outer peripheral surface 2 of the shaft member 1a and the first outer peripheral edge 6a of the first end surface 3a are also not in contact with the tapered surface 35 in a state where the tapered surface 35 provided on the inner peripheral surface of the recessed portion 14 of the jig 13 (see FIGS. 1A and 1B) is pressed against the first supported surface portion 9a of the chamfered portion 7c. Therefore, even if the shaft member 1 is deformed as the tapered surface 35 provided on the inner peripheral surface of the recessed portion 14 of the jig 13 is strongly pressed against the first supported surface portion 9a of the first chamfered portion 7a when the male screw portion 4 is rolled, the deformation can be retained in the step portions 18a, 18b that are axially adjacent to the first supported surface portion 9a. In short, the burr or protrusion excess portions 104a, 104b with a small thickness as shown in FIG. 15 can be prevented from being formed. The configuration and the operation and effect of other portions are the same as those of the first embodiment.

Although the chamfered portion 7c of the present embodiment is provided at the connection portion between the first end edge 5a on the one axial side of the outer peripheral surface 2 and the first outer peripheral edge 6a of the first end surface 3a on the one axial side, the chamfered portion 7c may be provided at the connection portion between the second end edge 5b on the other axial side of the outer peripheral surface 2 and the second outer peripheral edge 6b of the second end surface 3b on the other axial side.

### [Third Embodiment]

FIG. 9 shows a third embodiment of the present invention. A shaft member 1b of the present embodiment includes a chamfered portion 7d at the connection portion between the first end edge 5a on the one axial side of the outer peripheral surface 2 and the first outer peripheral edge 6a of the first end surface 3a on the one axial side. In the cross section in the axial direction, the first end edge 5a of the outer peripheral surface 2 and the first outer peripheral edge 6a of the first end surface 3a are located radially inward than a tangent line γ at an axially intermediate portion of a supported surface portion 9c, that is disposed at an axially intermediate portion of a chamfered portion 7d. Therefore, the chamfered portion 7d includes a supported surface portion 9c and a pair of step portions 18c, 18d.

The supported surface portion 9c is disposed at an axially intermediate portion of the chamfered portion 7d, and is a convex curved surface having an arc-shaped generatrix inclined radially outward as approaching the other axial side.

In the pair of step portions 18c, 18d, the step portion 18c on the one axial side connects the first outer peripheral edge 6a of the first end surface 3a and an end edge on the one axial side of the supported surface portion 9c. The step portion 18c includes a cylindrical surface portion 20c that is bent toward the other axial side from the first outer peripheral edge 6a of the first end surface 3a on the one axial side, and whose end edge on the other axial side is connected to an end edge on the one axial side of the supported surface portion 9c.

In the pair of step portions 18c, 18d, the step portion 18d on the other axial side connects an end edge on the other axial side of the supported surface portion 9c and the first end edge 5a on the one axial side of the outer peripheral surface 2. The step portion 18d on the other axial side includes a circular ring-shaped flat surface portion 19c which is bent radially inward from the first end edge 5a on the one axial side of the outer peripheral surface 2, and whose inner peripheral edge is connected to an end edge on the other axial side of the supported surface portion 9c.

In the present embodiment, the first end edge 5a on the one axial side of the outer peripheral surface 2 of the shaft member 1a and the first outer peripheral edge 6a of the first end surface 3a are also not in contact with the tapered surface 35 in a state where the tapered surface 35 provided on the inner peripheral surface of the recessed portion 14 of the jig 13 is pressed against the axially intermediate portion of the supported surface portion 9c of the chamfered portion 7d. Therefore, when the male screw portion 4 is rolled, deformation caused by strongly pressing the tapered surface 35 provided on the inner peripheral surface of the recessed portion 14 of the jig 13 against the axially intermediate portion of the supported surface portion 9c of the chamfered portion 7d can be retained in the step portions 18c, 18d. The configuration and the operation and effect of other portions are the same as those of the first embodiment and the second embodiment.

Although the chamfered portion 7d of the present embodiment is provided at the connection portion between the first end edge 5a on the one axial side of the outer peripheral surface 2 and the first outer peripheral edge 6a of the first end surface 3a on the one axial side, the chamfered portion 7d may be provided at the connection portion between the second end edge 5b on the other axial side of the outer peripheral surface 2 and the second outer peripheral edge 6b of the second end surface 3b on the other axial side.

### [Fourth Embodiment]

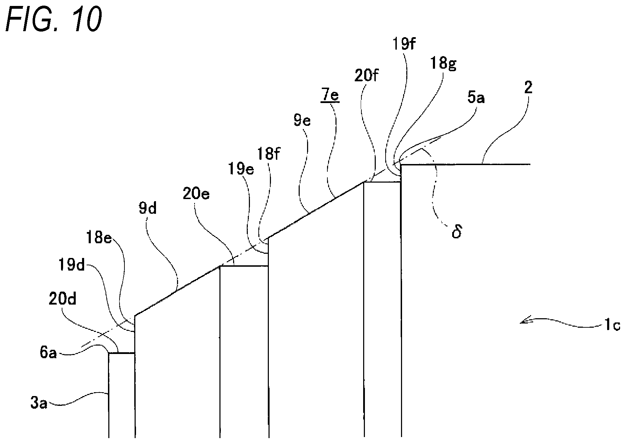

FIG. 10 shows a fourth embodiment of the present invention. A shaft member 1c of the present embodiment includes a chamfered portion 7e at the connection portion between the first end edge 5a on the one axial side of the outer peripheral surface 2 and the first outer peripheral edge 6a of the first end surface 3a on the one axial side. The chamfered portion 7e has a two-stage structure including a pair of supported surface portions 9d, 9e and three step portions 18e to 18g.

The pair of supported surface portions 9d, 9e are disposed at two positions on an axially intermediate portion of the chamfered portion 7e and each are a conical surface having a linear generatrix inclined radially outward as approaching the other axial side. The pair of supported surface portions 9d and 9e exist on the same conical surface. In a cross section in the axial direction, the first end edge 5a of the outer peripheral surface 2 and the first outer peripheral edge 6a of the first end surface 3a are located radially inward than a generatrix δ of the pair of supported surface portions 9d, 9e disposed at two positions on the axially intermediate portion of the chamfered portion 7e.

Among the three step portions 18e to 18g, the step portion 18e connects the first outer peripheral edge 6a of the first end surface 3a on the one axial side and an one axial side edge of the supported surface portion 9d on the one axial side. The step portion 18e includes a circular ring-shaped flat surface portion 19d that is bent radially inward from the one axial side edge of the supported surface portion 9d on the one axial side, and a cylindrical surface portion 20d which is bent toward the one axial side from an inner peripheral edge of the flat surface portion 19d and whose one axial side edge is connected to the first outer peripheral edge 6a of the first end surface 3a on the one axial side.

Among the three step portions 18e to 18g, the step portion 18f connects the other axial side edge of the supported surface portion 9d on the one axial side and an one axial side edge of the supported surface portion 9e on the other axial side. The step portion 18f includes a circular ring-shaped flat surface portion 19e that is bent radially inward from the one axial side edge of the supported surface portion 9e on the other axial side, and a cylindrical surface portion 20e which is bent toward the one axial side from the flat surface portion 19e and whose one axial side edge is connected to the other axial side edge of the supported surface portion 9d on the one axial side.

Among the three step portions 18e to 18g, the step portion 18g connects the other axial side edge of the supported surface portion 9e on the other axial side and the first end edge 5a on the one axial side of the outer peripheral surface 2. The step portion 18g includes a circular ring-shaped flat surface portion 19f that is bent radially inward from the first end edge 5a on the one axial side of the outer peripheral surface 2, and a cylindrical surface portion 20f which is bent toward the one axial side from the flat surface portion 19f and whose one axial side edge is connected to the other axial side edge of the supported surface portion 9e on the other axial side.

According to the present embodiment, when the male screw portion 4 is formed by rolling processing, a gap can be present over an entire periphery between the tapered surface 35 and the middle step portion 18f among the three step portions 18e to 18g in a state where the tapered surface 35 provided on the inner peripheral surface of the recessed portion 14 of the jig 13 is pressed against the pair of supported surface portions 9d, 9e of the chamfered portion 7e. In present embodiment, grease can be held in such a gap, and when the male screw portion 4 is formed, the chamfered portion 7e of the shaft member 1c can be smoothly slid with respect to the tapered surface 35. Further, when the male screw portion 4 is rolled, deformation caused by strongly pressing the tapered surface 35 against the pair of supported surface portions 9d, 9e of the chamfered portion 7e can be absorbed by the middle step portion 18f to some extent, and an amount of deformation of the step portions 18e, 18g on both axial sides can be reduced. The configuration and the operation and effect of other portions are the same as those of the first embodiment and the second embodiment.

Although the chamfered portion 7e of the present embodiment is provided at the connection portion between the first end edge 5a on the one axial side of the outer peripheral surface 2 and the first outer peripheral edge 6a of the first end surface 3a on the one axial side, the chamfered portion 7e may be provided at a connection portion between the second end edge 5b on the other axial side of the outer peripheral surface 2 and the second outer peripheral edge 6b of the second end surface 3b on the other axial side.

### [Fifth Embodiment]

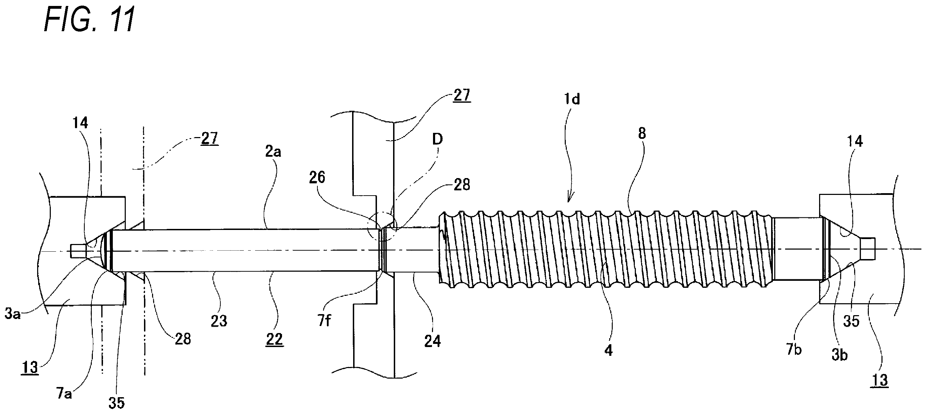

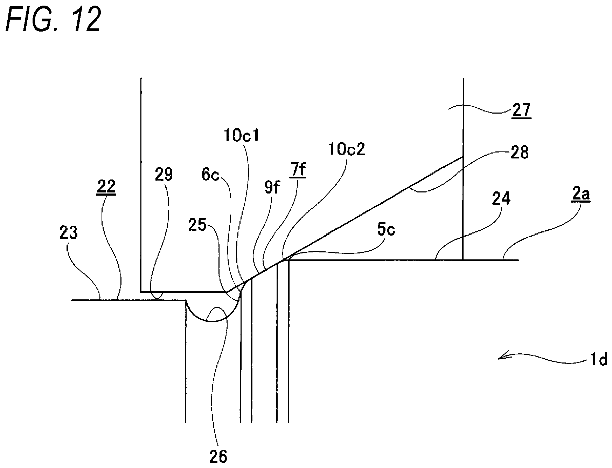

FIGS. 11 and 12 show a fifth embodiment of the present invention. A shaft member 1d of the present embodiment includes a chamfered portion 7f at an axially intermediate portion of the shaft member 1d in addition to the first and second chamfered portions 7a, 7b respectively formed at connection portions between the first and second end edges 5a, 5b on both axial sides of an outer peripheral surface 2a and the first and second outer peripheral edges 6a, 6b of the first and second end surfaces 3a, 3b on both axial sides. Therefore, the shaft member 1d of the present embodiment includes a stepped cylindrical portion 22 at a portion of an outer peripheral surface 2a which is deviated to the one axial side from a portion where the male screw portion 4 is formed. In the stepped cylindrical portion 22, a small-diameter cylindrical portion 23 on the one axial side and a large-diameter cylindrical portion 24 on the other axial side are connected by a step surface 25 facing the one axial side.

The chamfered portion 7f is formed at a connection portion between an end edge 5c on the one axial side of the large-diameter cylindrical portion 24 and an outer peripheral edge 6c of the step surface 25. The chamfered portion 7f includes a supported surface portion 9f and a pair of connection inclined surface portions 10c1, 10c2. In the present embodiment, the supported surface portion 9f is a conical surface having a linear generatrix. Further, in a cross section in the axial direction (a cross section including the central axis O of the shaft member 1d), the end edge 5c on the one axial side of the large-diameter cylindrical portion 24 and the outer peripheral edge 6c of the step surface 25 are located radially inward than a generatrix (including an extension line of the generatrix) of the supported surface portion 9f. FIG. 11 shows the shaft member 1d in a state after the male screw portion 4 is formed.

The supported surface portion 9f is a conical surface that is disposed at an axially intermediate portion of the chamfered portion 7f and has a linear generatrix inclined radially outward as approaching the other axial side.

In the pair of connection inclined surface portions 10c1, 10c2, the connection inclined surface portion 10c1 on the one axial side connects the outer peripheral edge 6c of the step surface 25 and an end edge on the one axial side of the supported surface portion 9f. The connection inclined surface portion 10c1 is a convex curved surface having an arc-shaped generatrix inclined radially outward as approaching the other axial side.

In the pair of connection inclined surface portions 10c1, 10c2, the connection inclined surface portion 10c2 on the other axial side connects an end edge on the other axial side of the supported surface portion 9f and the end edge 5c on the one axial side of the large-diameter cylindrical portion 24.

The connection inclined surface portion 10c2 is a convex curved surface having an arc-shaped generatrix inclined radially outward as approaching the other axial side.

Further, the shaft member 1d is provided with a recessed groove 26, which is recessed radially inward, at an end portion on the other axial side of the small-diameter cylindrical portion 23 over an entire periphery thereof.

In the present embodiment, when the male screw portion 4 is formed by the rolling processing, as shown in FIG. 11, the shaft member 1d is supported by pressing the tapered surfaces 35 provided on the inner peripheral surfaces of the recessed portions 14 of the pair of jigs 13 against the first and second supported surface portions 9a, 9b of the first and second chamfered portions 7a, 7b formed on both axial end portions of the shaft member 1d, and pressing a tapered surface 28 provided on another jig 27 against the supported surface portion 9f of the chamfered portion 7f formed at the axially intermediate portion of the shaft member 1d. The jig 27 has a circular hole 29 penetrating in the axial direction, and the tapered surface 28, inclined in a direction in which an inner diameter thereof increases as approaching the other axial side, at a portion on the other axial side of an inner peripheral surface of the circular hole 29. The circular hole 29 has an inner diameter larger than an outer diameter of the small-diameter cylindrical portion 23 of the shaft member 1d (a portion of the small-diameter cylindrical portion 23 that is deviated in the axial direction from a portion where the recessed groove 26 is present).

When the male screw portion 4 is formed, first, in a state where an end surface on the one axial side of the jig 27 overlaps a tip end surface (an end surface on the other axial side) of the jig 13 on the one axial side in the pair of jigs 13, as shown by a two-dot chain line in FIG. 11, the tapered surface 35 provided on the inner peripheral surface of the recessed portion 14 of the jig 13 on the one axial side is pressed against the first support surface portion 9a of the first chamfered portion 7a on the one axial side. Next, the jig 27 is slid toward the other axial side, and the tapered surface 28 is pressed against the supported surface portion 9f of the chamfered portion 7f at the middle in the axial direction.

In the present embodiment, in a state where the tapered surface 28 of the jig 27 is pressed against the supported surface portion 9f of the chamfered portion 7f, the end edge 5c on the one axial side of the large-diameter cylindrical portion 24 of the shaft member 1d and the outer peripheral edge 6c of the step surface 25 are not in contact with the tapered surface 28. Therefore, even if the shaft member 1d is deformed by strongly pressing the tapered surface 28 of the jig 27 against the supported surface portion 9f of the chamfered portion 7f when the male screw portion 4 is rolled, the deformation can be retained in the connection inclined surface portions 10c1, 10c2 axially adjacent to the supported surface portion 9f.

According to the present embodiment, since the axially intermediate portion can be supported in addition to the both axial end portions of the shaft member 1d, even when an axial dimension of a portion of the outer peripheral surface 2 of the shaft member 1d that is deviated from the male screw portion 4 is long to some extent, the shaft member 1d can be prevented from being bent and deformed (bucked).

Further, in the present embodiment, grease can be held in the recessed groove 26 provided in the end portion on the other axial side of the small-diameter cylindrical portion 23 of the shaft member 1d, and therefore, the chamfered portion 7f of the shaft member 1d can be smoothly slid with respect to the tapered surface 28 of the jig 27 when the male screw portion 4 is formed. The configuration and the operation and effect of other portions are the same as those of the first embodiment.

The stepped cylindrical portion 22 of the present embodiment is provided in a portion of the outer peripheral surface 2a that is deviated to the one axial side from a portion where the male screw portion 4 is formed, but the stepped cylindrical portion 22 be provided in a portion of the outer peripheral surface 2a that is deviated to the other axial side from the portion where the male screw portion 4 is formed.

### [Sixth Embodiment]

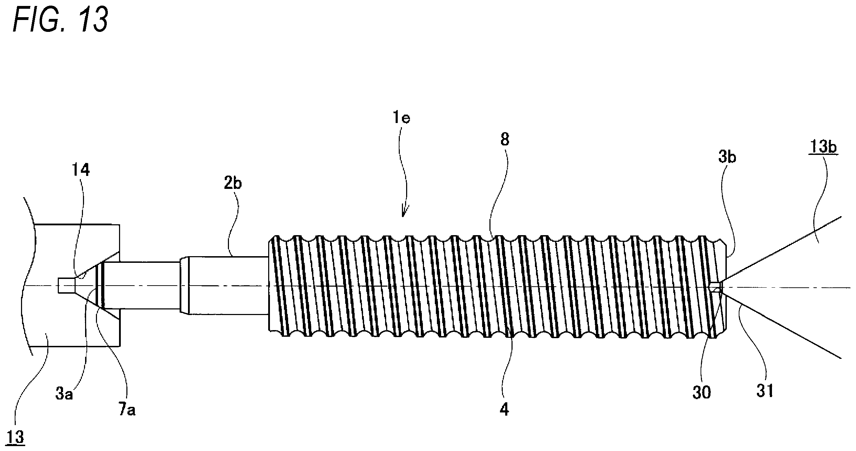

FIG. 13 shows a sixth embodiment of the present invention. A shaft member 1e of the present embodiment includes the male screw portion 4 in a range from an axially intermediate portion to an end edge on the other axial side on an outer peripheral surface 2b. That is, the shaft member 1e of the present embodiment includes only the first chamfered portion 7a at the connection portion between the first end edge 5a on the one axial side of the outer peripheral surface 2b and the first outer peripheral edge 6a of the first end surface 3a on the one axial side, and includes a recessed hole 30 having a conical concave surface shape at a central portion of the second end surface 3b on the other axial side. FIG. 13 shows the shaft member 1e in a state after the male screw portion 4 is formed.

In the present embodiment, when the male screw portion 4 is formed by the rolling processing, the shaft member 1e is supported by pressing the tapered surface 35 provided on the inner peripheral surface of the recessed portion 14 of the jig 13 against the first supported surface portion 9a of the first chamfered portion 7a formed on one axial end portion of the shaft member 1e, and abutting an outer peripheral surface of the tip end portion 31 provided on the jig 13b against an inner peripheral surface of the recessed hole 30 formed in the end surface 3b on the other axial side of the shaft member 1e. The configuration and the operation and effect of other portions are the same as those of the first embodiment.

The shaft member 1e of the present embodiment includes the male screw portion 4 in a range from the axially intermediate portion to the end edge on the other axial side on the outer peripheral surface 2b, but may include the male screw portion 4 in a range from the axially intermediate portion to the one axial side on the outer peripheral surface 2b. In this case, the shaft member 1e includes only the second chamfered portion 7b at the connection portion between the second end edge 5b on the other axial side of the outer peripheral surface 2b and the second outer peripheral edge 6b of the second end surface 3b on the other axial side, and includes the recessed hole 30 having a conical concave surface shape at a central portion of the first end surface 3a on the one axial side.

The structures of the first to sixth embodiments described above can be implemented in appropriate combinations as long as the embodiments do not cause a contradiction.

The shaft member of the present invention is not limited to the first to sixth embodiments described above. That is, the shaft member of the present invention can include a chamfered portion including at least one supported surface portion disposed at an axially intermediate portion thereof on at least one connection portion in connection portions between an outer peripheral surface and an axial side surface that is an axial end surface or a step surface, and can have a structure in which in a cross section in the axial direction, an axial end edge of the outer peripheral surface and an outer peripheral edge of the axial side surface are located radially inward than a tangent line at an axially intermediate portion of the supported surface portion. Specifically, for example, the shaft member of the present invention can have a structure having only the chamfered portion 7f formed at the connection portion between the large-diameter cylindrical portion 24 and the step surface 25 as in the fifth embodiment shown in FIG. 11, or can have a structure having only the first chamfered portion 7a at the connection portion between the first end edge 5a on the one axial side of the outer peripheral surface 2b and the first outer peripheral edge 6a of the first end surface 3a on the one axial side as in the sixth embodiment shown in FIG. 13.

The method for manufacturing a male shaft of the present invention is not limited to the first embodiment to the sixth embodiment described above. That is, the method for manufacturing a male shaft of the present invention can includes a step of performing processing for forming the male-side engagement portion on the outer peripheral surface of the shaft member in a state where the shaft member is positioned in the radial direction by pressing at least the axially intermediate portion of the supported surface portion of the at least one chamfered portion provided on the shaft member against the tapered surface provided on the jig. Specifically, for example, the method for manufacturing the male shaft of the present invention can include a step of performing processing for forming the male-side engagement portion in a state where the axially intermediate portion of the shaft member is supported by pressing the tapered surface 28 of the jig 27 against only the chamfered portion 7f formed at the connection portion between the large-diameter cylindrical portion 24 and the step surface 25, as in the fifth embodiment shown in FIG. 11. In this case, recessed holes each having a conical concave surface shape are formed in the end surfaces on both axial sides of the shaft member and both axial end portions of the shaft member are supported by abutting a conical outer peripheral surface of a tip end portion provided on the jig against an inner peripheral surface of the recessed hole. Further, the shaft member 1e can also be supported by pressing the tapered surface 35 provided on the inner peripheral surface of the recessed portion 14 of the jig 13 against the first support surface portion 9a of the first chamfered portion 7a formed on the one axial end portion of the shaft member 1e, and abutting the outer peripheral surface of the conical tip end portion 31 provided on the jig 13b against the recessed hole 30 formed on the end surface 3b on the other axial side of the shaft member 1e, as in the sixth embodiment shown in FIG. 13.

In the shaft member of the present invention, for example, the chamfered portion may include a supported surface portion having an arc-shaped cross-sectional shape and a pair of connection inclined surface portions each having an arc-shaped cross-sectional shape. In this case, a curvature radius of the supported surface portion is set to be larger than a curvature radius of each of the connection inclined surface portions.

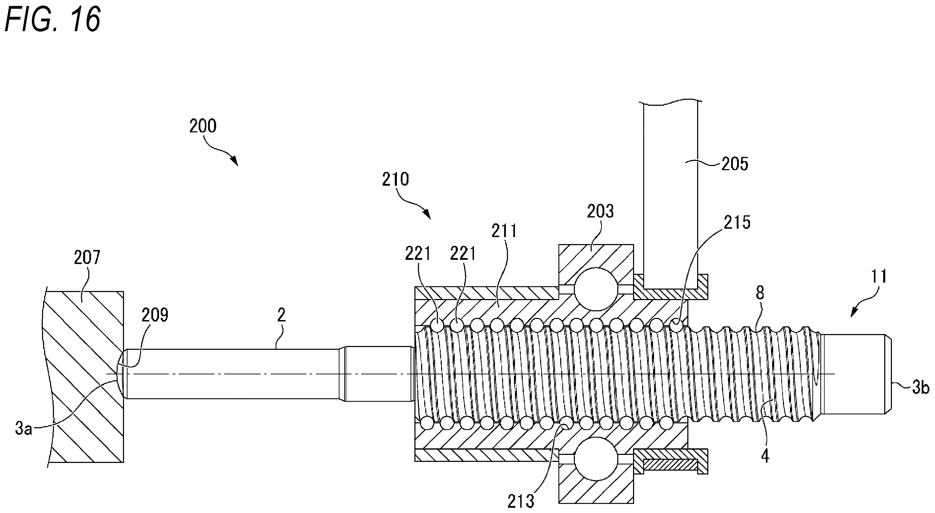

The male shaft 11 of the present invention can be applied as a screw shaft for a brake actuator. FIG. 16 shows a cross-sectional view of a main part of a brake actuator 200 in a case where the male shaft 11 of the first embodiment is applied as a screw shaft for a brake actuator.

The brake actuator 200 is used for a vehicle, and is fixed to a suspension device of a vehicle body via a bracket, a housing, or the like. The brake actuator 200 includes a ball screw 210 that is used for nut rotation, a bearing 203 that rotatably supports the ball screw 210 in a housing (not shown), a belt 205 that is connected to a motor or the like and drives a nut 211 (to be described later) of the ball screw 210, and a pressed member 207 that is pressed by the male shaft 11 of the ball screw 210. The nut 211 is not limited to being driven by the belt 205, and may be driven by a gear or the like.

The ball screw 210 includes the male shaft 11, the nut 211, a rolling path 215 formed between the male screw groove 8 on the outer peripheral surface of the male shaft 11 and a female screw groove 213 on an inner peripheral surface of the nut 211, and a plurality of balls 221 disposed in the rolling path 215. A ball circulation method of the ball screw 210 is not particularly limited, and an end cap method, a flop over method, a return tube method, a guide plate method, and the like are appropriately applied.

A recessed portion 209 is formed in a side surface of the pressed member 207. A shape of the recessed portion 209 matches the shape of the first end surface 3a of the male shaft 11. Further, the first end surface 3a of the male shaft 11 is fitted into the recessed portion 209 of the pressed member 207, and thus the pressed member 207 is fixed to the male shaft 11.

In the brake actuator 200, the nut 211 is rotationally driven by a motor or the like via the belt 205, the male shaft 11 advances toward one axial side, and the pressed member 207 is pressed toward the one axial side. Accordingly, the pressed member 207 presses a brake pad against a brake disc, and a braking force is generated on the brake disc.

As described above, the male shaft 11 of the present application can be used as a screw shaft for a brake disc actuator. In particular, the male shaft 11 of the present application is preferable as a screw shaft of a brake actuator because of good shape accuracy.

### REFERENCE SIGNS LIST

1, 1a, 1b, 1c, 1d, 1e, 1z: shaft member
2, 2a, 2b: outer peripheral surface
3a, 3b: end surface
4: male screw portion
5a, 5b, 5c: end edge
6a, 6b, 6c: outer peripheral edge
7a, 7b, 7c, 7d, 7e, 7f: chamfered portion
8: male screw groove
9a, 9b, 9c, 9d, 9e, 9f: supported surface portion
10a1, 10a2, 10b1, 10b2, 10c1, 10c2: connection inclined surface portion
11: male shaft
12: processing target portion
13, 13a, 13b: jig
14, 14a: recessed portion
15: round die
16: screw cutting teeth
17: flat die
18a, 18b, 18c, 18d, 18e, 18f, 18g: step portion
19a, 19b, 19c, 19d, 19e, 19f: flat surface portion
20a, 20b, 20c, 20d, 20e, 20f: cylindrical surface portion
22: stepped cylindrical portion
23: small diameter cylindrical portion
24: large diameter cylindrical portion
25: step surface
26: recessed groove
27: jig
28: tapered surface
29: circular hole
30: recessed hole
31: tip end portion
32: through hole
33: dial gauge
34: probe
35: tapered surface
100: recessed portion
101: jig
102: shaft member
103: chamfered portion
104a, 104b: excess portion
200: brake actuator
205: belt
207: pressed member
209: recessed portion
210: ball screw
211: nut
213: female screw groove
215: rolling path
221: ball

## Claims

1. A shaft member (1, 1a, 1b, 1c, 1d, 1e) comprising:
an outer peripheral surface (2, 2a, 2b);
at least one axial side surface (3a, 3b) facing an axial direction;
a chamfered portion (7a, 7b, 7c, 7d, 7e, 7f) formed at a connection portion between an axial end edge (5a, 5b, 5c) of the outer peripheral surface (2, 2a, 2b) and an outer peripheral edge (6a, 6b, 6c) of the axial side surface; and
a processing target portion (12) formed on at least a part of the outer peripheral surface (2, 2a, 2b),
wherein:
the chamfered portion (7a, 7b, 7c, 7d, 7e, 7f) includes at least one supported surface portion (9a, 9b, 9c, 9d, 9e, 9f) disposed at an axially intermediate portion of the chamfered portion (7a, 7b, 7c, 7d, 7e, 7f) and inclined radially outward as approaching the processing target portion in the axial direction, and
a connection inclined surface portion (10a1, 10a2, 10b1, 10b2, 10c1, 10c2) or step (18a, 18b, 18c, 18d, 18e, 18f, 18g) of the chamfered portion (7a, 7b, 7c, 7d, 7e, 7f) connects an axial end edge of the supported surface portion (9a, 9b, 9c, 9d, 9e, 9f) with the axial end edge (5a, 5b, 5c) of the outer peripheral surface (2, 2a, 2b) or the outer peripheral edge (6a, 6b, 6c) of the axial side surface,
the shaft member (1, 1a, 1b, 1c, 1d, 1e) **characterized in that**:
the axial end edge (5a, 5b, 5c) of the outer peripheral surface (2, 2a, 2b) and the outer peripheral edge (6a, 6b, 6c) of the axial side surface are located radially inward of a tangent line at an axially intermediate portion of the supported surface portion (9a, 9b, 9c, 9d, 9e, 9f), in a cross section in the axial direction,
the connection inclined surface portion (10a1, 10a2, 10b1, 10b2, 10c1, 10c2) or the step portion (18a, 18b, 18c, 18d, 18e, 18f, 18g) is configured to absorb the elongation of the shaft member (1, 1a, 1b, 1c, 1d, 1e) when the supported surface portion (9a, 9b, 9c, 9d, 9e, 9f) is pressed in the radial direction,
wherein the connection inclined surface portion (10a1, 10a2, 10b1, 10b2, 10c1, 10c2) is a convex curved surface having an arc-shaped generatrix inclined radially outward as approaching the other axial side.

2. The shaft member (1, 1a, 1b, 1c, 1d, 1e) according to claim 1, wherein the supported surface portion (9a, 9b, 9c, 9d, 9e, 9f) is a conical surface having a linear generatrix.

3. The shaft member (1, 1a, 1b, 1c, 1d, 1e) according to claim 1, wherein the supported surface portion (9a, 9b, 9c, 9d, 9e, 9f) is a convex curved surface having an arc-shaped generatrix.

4. The shaft member (1, 1a, 1b, 1c, 1d, 1e) according to any one of claims 1 to 3, wherein the chamfered portion (7a, 7b, 7c, 7d, 7e, 7f) further includes:
a first connection inclined surface portion (10a2, 10b2, 10c2) that connects an axial end edge on a side axially close to the processing target portion (12) in both axial end edges of the supported surface portion (9a, 9b, 9c, 9d, 9e, 9f) and the axial end edge (5a, 5b, 5c) of the outer peripheral surface (2, 2a, 2b), and that is inclined radially outward as approaching the processing target portion (12) in the axial direction, or
a first step portion (18b, 18d, 18g) that has a circular ring-shaped flat surface portion (19b, 19d, 19f) bent radially inward from at least the axial end edge (5a, 5b, 5c) of the outer peripheral surface (2, 2a, 2b).

5. The shaft member (1, 1a, 1b, 1c, 1d, 1e) according to any one of claims 1 to 3, wherein the chamfered portion (7a, 7b, 7c, 7d, 7e, 7f) further includes:
a connection inclined surface portion (10a1, 10b1, 10c1) that connects an axial end edge on a side axially far from the processing target portion (12) in the both axial end edges of the supported surface portion (9a, 9b, 9c, 9d, 9e, 9f) and the outer peripheral edge (6a, 6b) of the axial side surface (3a, 3b), and that is inclined radially outward as approaching the processing target portion (12) in the axial direction, or
a step portion (18a, 18c, 18e) that has a cylindrical surface portion (20a, 20c, 20d) bent from at least the outer peripheral edge (6a, 6b) of the axial side surface (3a) in a direction approaching the processing target portion (12) in the axial direction.

6. The shaft member (1, 1a, 1b, 1c, 1d, 1e) according to claim 4, wherein the chamfered portion (7a, 7b, 7c, 7d, 7e, 7f) further includes:
a second connection inclined surface portion (10a1, 10b1, 10c1) that connects an axial end edge on a side axially far from the processing target portion (12) in the both axial end edges of the supported surface portion (9a, 9b, 9c, 9d, 9e, 9f) and the outer peripheral edge (6a, 6b) of the axial side surface (3a, 3b), and that is inclined radially outward as approaching the processing target portion (12) in the axial direction, or
a second step portion (18a, 18c, 18e) that has a cylindrical surface portion (20a, 20c, 20d) bent from at least the outer peripheral edge (6a, 6b) of the axial side surface (3a) in a direction approaching the processing target portion (12) in the axial direction.

7. The shaft member (1, 1a, 1b, 1c, 1d, 1e) according to any one of claims 1 to 6, wherein
the chamfered portion (7a, 7b, 7c, 7d, 7e, 7f) includes a pair of the supported surface portions (9d, 9e), and the pair of supported surface portions (9d, 9e) are connected to each other by a third step portion (18f) including a circular ring-shaped flat surface portion (19e) and a cylindrical surface portion (20e).

8. The shaft member (1, 1a, 1b, 1c, 1d, 1e) according to any one of claims 1 to 7, wherein the axial side surface is an axial end surface (3a, 3b).

9. The shaft member (1, 1a, 1b, 1c, 1d, 1e) according to any one of claims 1 to 8, wherein
a stepped cylindrical portion (22), in which a small-diameter cylindrical portion (23) and a large-diameter cylindrical portion (24) are connected to each other by a step surface (25) facing the axial direction, is provided at a portion on the outer peripheral surface (2, 2a, 2b) that is deviated from the processing target portion (12) in the axial direction, and the axial side surface is the step surface (25).

10. The shaft member (1, 1a, 1b, 1c, 1d, 1e) according to claim 9, wherein
a recessed groove (26) recessed radially inward is provided in an end portion of the small-diameter cylindrical portion (23) that is on a side close to the large-diameter cylindrical portion (24) in the axial direction.

11. The shaft member (1, 1a, 1b, 1c, 1d, 1e) according to any one of claims 1 to 10, wherein the shaft member (1, 1a, 1b, 1c, 1d, 1e) is used as a screw shaft for a brake actuator (200).

12. The shaft member (1, 1a, 1b, 1c, 1d, 1e) according to any one of claims 1 to 11, wherein
a pair of the chamfered portions (7a, 7b, 7c, 7d, 7e, 7f) are formed at the connection portion between the axial ends of the outer peripheral surface (2, 2a, 2b) and the outer peripheral edge (6a, 6b, 6c) of both axial side surfaces of the shaft member (1).
the length of the supported surface portion (9a, 9b, 9c, 9d, 9e, 9f) of one of the pair of the chamfered portions (7a, 7b, 7c, 7d, 7e, 7f) is longer than the length of the supported surface portion (9a, 9b, 9c, 9d, 9e, 9f) of the other of the pair of the chamfered portions (7a, 7b, 7c, 7d, 7e, 7f).

13. The shaft member (1, 1a, 1b, 1c, 1d, 1e) according to claim 12, wherein
the one of the pair of the chamfered portions (7a, 7b, 7c, 7d, 7e, 7f) includes:
a first connecting inclined surface portion (10a2, 10b2, 10c2) connecting axial end edges of both axial ends of the supported surface portion (9a, 9b, 9c, 9d, 9e, 9f) that are close to the processing target portion (12) with respect to the axial direction and the axial end edge (5a, 5b, 5c) of the outer peripheral surface (2, 2a, 2b), and inclined in a direction that moves outward in the radial direction as it approaches the processing target portion (12) in the axial direction; and
a second connection inclined surface portion (10a1, 10b1, 10c1) connecting the axial end edges of both ends of the supported surface portion (9a, 9b, 9c, 9d, 9e, 9f) that are farther from the processing target portion (12) in the axial direction to the outer peripheral edge (6a, 6b, 6c) of the axial side, and is inclined in a direction that moves outward in the radial direction as it approaches the
processing target portion (12) in the axial direction
and
in the one of the pair of the chamfered portions (7a, 7b, 7c, 7d, 7e, 7f), an axial dimension (d₁₀ₐ₂, d_{10b2}) of the first connection inclined surface portion (10a2, 10b2, 10c2) is equal to the axial dimension (d₁₀ₐ₁, d_{10b1}) of the second connection inclined surface portion (10a1, 10b1,10c1).

14. The shaft member (1, 1a, 1b, 1c, 1d, 1e) according to claim 12 or 13, wherein
the other of the pair of the chamfered portions (7a, 7b, 7c, 7d, 7e, 7f) includes:
a first connecting inclined surface portion (10a2, 10b2, 10c2) connecting axial end edges of both axial ends of the supported surface portion (9a, 9b, 9c, 9d, 9e, 9f) that are close to the processing target portion (12) with respect to the axial direction and the axial end edge (5a, 5b, 5c) of the outer peripheral surface (2, 2a, 2b), and inclined in a direction that moves outward in the radial direction as approaching the processing target portion (12) in the axial direction; and
a second connection inclined surface (10a1, 10b1, 10c1) connecting the axial end edges of both ends of the supported surface portion (9a, 9b, 9c, 9d, 9e, 9f) that are farther from the processing target portion (12) in the axial direction and the outer peripheral edge (6a, 6b, 6c) of the axial side, and is inclined in a direction that moves outward in the radial direction as approaching the processing target portion (12) in the axial direction, and
in the other of the pair of the chamfered portions (7a, 7b, 7c, 7d, 7e, 7f), an axial dimension (d₁₀ₐ₂, d_{10b2}) of the first connection inclined surface portion (10a1, 10b1, 10c1) is larger than the axial dimension (d₁₀ₐ₁, d_{10b1}) of the second connection inclined surface portion (10a2, 10b2, 10c2).

15. A method of manufacturing a male shaft (11) including an outer peripheral surface (2, 2a, 2b), and a male-side engagement portion formed on at least a part of the outer peripheral surface (2, 2a, 2b), the method comprising:
a step of performing processing for forming the male-side engagement portion on the outer peripheral surface (2, 2a, 2b) in a state where the shaft member (1, 1a, 1b, 1c, 1d, 1e) according to any one of claims 1 to 13 is positioned in a radial direction by pressing at least an axially intermediate portion of the supported surface portion (9a, 9b, 9c, 9d, 9e, 9f) of the shaft member (1, 1a, 1b, 1c, 1d, 1e) against a tapered surface (35) provided on a jig (13, 13a, 13b).

16. A method of manufacturing a male shaft (11) including an outer peripheral surface (2, 2a, 2b), and a male-side engagement portion formed on at least a part of the outer peripheral surface (2, 2a, 2b), the method comprising:
a step of performing processing for forming the male-side engagement portion on the outer peripheral surface (2, 2a, 2b) in a state where at least an axially intermediate portion of the supported surface (9a, 9b, 9c, 9d, 9e, 9f) portion of the shaft member (1, 1a, 1b, 1c, 1d, 1e) according to claim 9 is pressed against a tapered surface (35) provided on a jig (13, 13a, 13b) and grease is held in the recessed groove (26).

17. The method of manufacturing a male shaft (11) according to claim 15 or 16, wherein
the processing for forming the male-side engagement portion is rolling processing.

18. The method of manufacturing a male shaft (11) according to any one of claims 15 to 17, wherein the male-side engagement portion is a male screw portion (4) in which a male screw groove (8) is spirally formed.

19. The method of manufacturing a male shaft (11) according to any one of claims 15 to 18, further comprising:
a heat treatment step of performing a heat treatment on the male shaft (11), wherein
the male shaft (11) is not further processed after the heat treatment step.

## Patentansprüche

1. Wellenelement (1, 1a, 1b, 1c, 1d, 1e), umfassend:
eine Außenumfangsoberfläche (2, 2a, 2b);
zumindest eine axiale Seitenfläche (3a, 3b), die einer axialen Richtung zugewandt ist;
einen abgeschrägten Abschnitt (7a, 7b, 7c, 7d, 7e, 7f), der an einem Verbindungsabschnitt zwischen einer axialen Endkante (5a, 5b, 5c) der Außenumfangsoberfläche (2, 2a, 2b) und einer Außenumfangskante (6a, 6b, 6c) der axialen Seitenfläche ausgebildet ist; und
einen Bearbeitungszielabschnitt (12), der auf zumindest einem Teil der Außenumfangsoberfläche (2, 2a, 2b) ausgebildet ist,
wobei:
der abgeschrägte Abschnitt (7a, 7b, 7c, 7d, 7e, 7f) zumindest einen gelagerten Oberflächenabschnitt (9a, 9b, 9c, 9d, 9e, 9f) aufweist, der an einem axialen Zwischenabschnitt des abgeschrägten Abschnitts (7a, 7b, 7c, 7d, 7e, 7f) angeordnet und radial nach außen hin zu dem Bearbeitungszielabschnitt in die axiale Richtung geneigt ist, und
einen geneigten Verbindungsflächenabschnitt (10a1, 10a2, 10b1, 10b2, 10c1, 10c2) oder eine Stufe (18a, 18b, 18c, 18d, 18e, 18f, 18g) des abgeschrägten Abschnitts (7a, 7b, 7c, 7d, 7e, 7f), der eine axiale Endkante des gelagerten Oberflächenabschnitts (9a, 9b, 9c, 9d, 9e, 9f) mit der axialen Endkante (5a, 5b, 5c) der Außenumfangsoberfläche (2, 2a, 2b) oder der Außenumfangskante (6a, 6b, 6c) der axialen Seitenfläche verbindet,
wobei das Wellenelement (1, 1a, 1b, 1c, 1d, 1e) **dadurch gekennzeichnet ist, dass**:
die axiale Endkante (5a, 5b, 5c) der Außenumfangsoberfläche (2, 2a, 2b) und die Außenumfangskante (6a, 6b, 6c) der axialen Seitenfläche in einem Querschnitt in der axialen Richtung radial nach innen von einer Tangenslinie an einem axialen Zwischenabschnitt des gelagerten Oberflächenabschnitts (9a, 9b, 9c, 9d, 9e, 9f) angeordnet sind,
der geneigte Verbindungsflächenabschnitt (10a1, 10a2, 10b1, 10b2, 10c1, 10c2) oder der Stufenabschnitt (18a, 18b, 18c, 18d, 18e, 18f, 18g) ausgelegt ist, um die Dehnung des Wellenelements (1, 1a, 1b, 1c, 1d, 1e) zu absorbieren, wenn der gelagerte Oberflächenabschnitt (9a, 9b, 9c, 9d, 9e, 9f) in die radiale Richtung gedrückt wird,
wobei der geneigte Verbindungsflächenabschnitt (10a1, 10a2, 10b1, 10b2, 10c1, 10c2) eine konvex gekrümmte Oberfläche mit einer bogenförmigen Erzeugenden ist, die hin zur anderen axialen Seite radial nach außen geneigt ist.

2. Wellenelement (1, 1a, 1b, 1c, 1d, 1e) nach Anspruch 1, wobei der gelagerte Oberflächenabschnitt (9a, 9b, 9c, 9d, 9e, 9f) eine konische Oberfläche mit einer linearen Erzeugenden ist.

3. Wellenelement (1, 1a, 1b, 1c, 1d, 1e) nach Anspruch 1, wobei der gelagerte Oberflächenabschnitt (9a, 9b, 9c, 9d, 9e, 9f) eine konvex gekrümmte Oberfläche mit einer bogenförmigen Erzeugenden ist.

4. Wellenelement (1, 1a, 1b, 1c, 1d, 1e) nach einem der Ansprüche 1 bis 3, wobei der abgeschrägte Abschnitt (7a, 7b, 7c, 7d, 7e, 7f) ferner Folgendes umfasst:
einen ersten geneigten Verbindungsflächenabschnitt (10a2, 10b2, 10c2), der eine axiale Endkante auf einer Seite, die axial nahe an dem Bearbeitungszielabschnitt (12) liegt, an beiden axialen Endkanten des gelagerten Oberflächenabschnitts (9a, 9b, 9c, 9d, 9e, 9f) und die axiale Endkante (5a, 5b, 5c) der Außenumfangsoberfläche (2, 2a, 2b) verbindet, und die radial nach außen hin zum Bearbeitungszielabschnitt (12) in die axiale Richtung geneigt ist, oder
einen ersten Stufenabschnitt (18b, 18d, 18g), der einen kreisförmigen ringförmigen flachen Oberflächenabschnitt (19b, 19d, 19f) aufweist, der von zumindest der axialen Endkante (5a, 5b, 5c) der Außenumfangsoberfläche (2, 2a, 2b) radial nach innen gebogen ist.

5. Wellenelement (1, 1a, 1b, 1c, 1d, 1e) nach einem der Ansprüche 1 bis 3, wobei der abgeschrägte Abschnitt (7a, 7b, 7c, 7d, 7e, 7f) ferner Folgendes umfasst:
einen geneigten Verbindungsflächenabschnitt (10a1, 10b1, 10c1), der eine axiale Endkante auf einer Seite, die axial weiter weg von dem Bearbeitungszielabschnitt (12) liegt, an den beiden axialen Endkanten des gelagerten Oberflächenabschnitts (9a, 9b, 9c, 9d, 9e, 9f) und die Außenumfangskante (6a, 6b) der axialen Seitenfläche (3a, 3b) verbindet, und die radial nach außen hin zum Bearbeitungszielabschnitt (12) in die axiale Richtung geneigt ist, oder
einen Stufenabschnitt (18a, 18c, 18e), der einen zylindrischen Oberflächenabschnitt (20a, 20c, 20d) aufweist, der ausgehend von zumindest der Außenumfangskante (6a, 6b) der axialen Seitenfläche (3a) in eine Richtung hin zum Bearbeitungszielabschnitt (12) in die axiale Richtung gebogen ist.

6. Wellenelement (1, 1a, 1b, 1c, 1d, 1e) nach Anspruch 4, wobei der abgeschrägte Abschnitt (7a, 7b, 7c, 7d, 7e, 7f) ferner Folgendes umfasst:
einen zweiten geneigten Verbindungsflächenabschnitt (10a1, 10b1, 10c1), der eine axiale Endkante auf einer Seite, die axial weiter weg von dem Bearbeitungszielabschnitt (12) liegt, an den beiden axialen Endkanten des gelagerten Oberflächenabschnitts (9a, 9b, 9c, 9d, 9e, 9f) und die Außenumfangskante (6a, 6b) der axialen Seitenfläche (3a, 3b) verbindet, und die radial nach außen hin zum Bearbeitungszielabschnitt (12) in die axiale Richtung geneigt ist, oder
einen zweiten Stufenabschnitt (18a, 18c, 18e), der einen zylindrischen Oberflächenabschnitt (20a, 20c, 20d) aufweist, der ausgehend von zumindest der Außenumfangskante (6a, 6b) der axialen Seitenfläche (3a) in eine Richtung hin zum Bearbeitungszielabschnitt (12) in die axiale Richtung gebogen ist.

7. Wellenelement (1, 1a, 1b, 1c, 1d, 1e) nach einem der Ansprüche 1 bis 6, wobei:
der abgeschrägte Abschnitt (7a, 7b, 7c, 7d, 7e, 7f) ein Paar der gelagerten Oberflächenabschnitte (9d, 9e) umfasst, und wobei das Paar von gelagerten Oberflächenabschnitten (9d, 9e) durch einen dritten Stufenabschnitt (18f), der einen kreisförmigen ringförmigen flachen Oberflächenabschnitt (19e) und einen zylindrischen Oberflächenabschnitt (20e) aufweist, miteinander verbunden ist.

8. Wellenelement (1, 1a, 1b, 1c, 1d, 1e) nach einem der Ansprüche 1 bis 7, wobei die axiale Seitenfläche eine axiale Endoberfläche (3a, 3b) ist.

9. Wellenelement (1, 1a, 1b, 1c, 1d, 1e) nach einem der Ansprüche 1 bis 8, wobei:
ein gestufter zylindrischer Abschnitt (22), in dem ein zylindrischer Abschnitt mit kleinem Durchmesser (23) und ein zylindrischer Abschnitt mit großem Durchmesser (24) über eine Stufenoberfläche (25), die der axialen Richtung zugewandt ist, miteinander verbunden sind, an einem Abschnitt der Außenumfangsoberfläche (2, 2a, 2b), die in die axiale Richtung von dem Bearbeitungszielabschnitt (12) abgewandt ist, bereitgestellt ist, und
wobei die axiale Seitenfläche die Stufenoberfläche (25) ist.

10. Wellenelement (1, 1a, 1b, 1c, 1d, 1e) nach Anspruch 9, wobei:
eine vertiefte Nut (26), die radial nach innen vertieft ist, in einem Endabschnitt des zylindrischen Abschnitts mit kleinem Durchmesser (23) bereitgestellt ist, der auf einer Seite nahe dem zylindrischen Abschnitt mit großem Durchmesser (24) in die axiale Richtung angeordnet ist.

11. Wellenelement (1, 1a, 1b, 1c, 1d, 1e) nach einem der Ansprüche 1 bis 10, wobei das Wellenelement (1, 1a, 1b, 1c, 1d, 1e) als Schneckenwelle für einen Bremszylinder (200) verwendet wird.

12. Wellenelement (1, 1a, 1b, 1c, 1d, 1e) nach einem der Ansprüche 1 bis 11, wobei:
ein Paar der abgeschrägten Abschnitte (7a, 7b, 7c, 7d, 7e, 7f) an dem Verbindungsabschnitt zwischen den axialen Enden der Außenumfangsoberfläche (2, 2a, 2b) und der Außenumfangskante (6a, 6b, 6c) beider axialer Seitenflächen des Wellenelements (1) ausgebildet ist,
wobei die Länge des gelagerten Oberflächenabschnitts (9a, 9b, 9c, 9d, 9e, 9f) eines aus dem Paar von abgeschrägten Abschnitten (7a, 7b, 7c, 7d, 7e, 7f) länger ist als die Länge des gelagerten Oberflächenabschnitts (9a, 9b, 9c, 9d, 9e, 9f) des anderen aus dem Paar von abgeschrägten Abschnitten (7a, 7b, 7c, 7d, 7e, 7f).

13. Wellenelement (1, 1a, 1b, 1c, 1d, 1e) nach Anspruch 12, wobei:
der eine aus dem Paar von abgeschrägten Abschnitten (7a, 7b, 7c, 7d, 7e, 7f) Folgendes umfasst:
einen ersten geneigten Verbindungsflächenabschnitt (10a2, 10b2, 10c2), der axiale Endkanten beider axialen Enden des gelagerten Oberflächenabschnitts (9a, 9b, 9c, 9d, 9e, 9f), die in Bezug auf die axiale Richtung nahe am Bearbeitungszielabschnitt (12) liegen, und die axiale Endkante (5a, 5b, 5c) der Außenumfangsoberfläche (2, 2a, 2b) verbindet, und der in eine Richtung geneigt ist, die sich in die radiale Richtung hin zum Bearbeitungszielabschnitt (12) in die axiale Richtung nach außen bewegt; und
einen zweiten geneigten Verbindungsflächenabschnitt (10a1, 10b1, 10c1), der die axialen Endkanten beider Enden des gelagerten Oberflächenabschnitts (9a, 9b, 9c, 9d, 9e, 9f), die in die axiale Richtung weiter weg von dem Bearbeitungszielabschnitt (12) liegen, mit der Außenumfangskante (6a, 6b, 6c) der axialen Seite verbindet, und der in eine Richtung geneigt ist, die sich in die radiale Richtung hin zum Bearbeitungszielabschnitt (12) in die axiale Richtung nach außen bewegt; und
in dem einen aus dem Paar von abgeschrägten Abschnitten (7a, 7b, 7c, 7d, 7e, 7f) eine axiale Abmessung (d₁₀ₐ₂, d_{10b2}) des ersten geneigten Verbindungsflächenabschnitts (10a2, 10b2, 10c2) gleich der axialen Abmessung (d₁₀ₐ₁, _{10b1}) des zweiten geneigten Verbindungsflächenabschnitts (10a1, 10b1, 10c1) ist.

14. Wellenelement (1, 1a, 1b, 1c, 1d, 1e) nach Anspruch 12 oder 13, wobei:
der andere aus dem Paar von abgeschrägten Abschnitten (7a, 7b, 7c, 7d, 7e, 7f) Folgendes umfasst:
einen ersten geneigten Verbindungsflächenabschnitt (10a2, 10b2, 10c2), der axiale Endkanten beider axialen Enden des gelagerten Oberflächenabschnitts (9a, 9b, 9c, 9d, 9e, 9f), die in Bezug auf die axiale Richtung nahe an dem Bearbeitungszielabschnitt (12) liegen, mit der axialen Endkante (5a, 5b, 5c) der Außenumfangsoberfläche (2, 2a, 2b) verbindet, und der in eine Richtung geneigt ist, die sich in die radiale Richtung hin zum Bearbeitungszielabschnitt (12) in die axiale Richtung nach außen bewegt; und
einen zweiten geneigten Verbindungsflächenabschnitt (10a1, 10b1, 10c1), der die axialen Endränder beider Enden des gelagerten Oberflächenabschnitts (9a, 9b, 9c, 9d, 9e, 9f), die in die axiale Richtung weiter weg von dem Bearbeitungszielabschnitt (12) liegen, und die Außenumfangskante (6a, 6b, 6c) der axialen Seite verbindet, und der in eine Richtung geneigt ist, die sich in die radiale Richtung hin zum Bearbeitungszielabschnitt (12) in die axiale Richtung nach außen bewegt; und
in dem anderen aus dem Paar von abgeschrägten Abschnitten (7a, 7b, 7c, 7d, 7e, 7f) eine axiale Abmessung (d₁₀ₐ₂, d_{10b2}) des ersten geneigten Verbindungsflächenabschnitts (10a1, 10b1, 10c1) gleich der axialen Abmessung (d₁₀ₐ₁, _{10b1}) des zweiten geneigten Verbindungsflächenabschnitts (10a2, 10b2, 10c2) ist.

15. Verfahren zur Herstellung einer Innenwelle (11), einschließlich einer Außenumfangsoberfläche (2, 2a, 2b) und eines innenseitigen Eingriffsabschnitts, der auf zumindest einem Teil der Außenumfangsoberfläche (2, 2a, 2b) ausgebildet ist, wobei das Verfahren Folgendes umfasst:
einen Schritt des Durchführens einer Bearbeitung zum Ausbilden des innenseitigen Eingriffsabschnitts auf der Außenumfangsoberfläche (2, 2a, 2b) in einem Zustand, in dem ein Wellenelement (1, 1a, 1b, 1c, 1d, 1e) nach einem der Ansprüche 1 bis 13 durch Drücken von zumindest einem axialen Zwischenabschnitt des gelagerten Oberflächenabschnitts (9a, 9b, 9c, 9d, 9e, 9f) des Wellenelements (1, 1a, 1b, 1c, 1d, 1e) gegen eine verjüngte Oberfläche (35), die auf einer Spannvorrichtung (13, 13a, 13b) bereitgestellt ist, in eine radiale Richtung positioniert wird.

16. Verfahren zur Herstellung einer Innenwelle (11), einschließlich einer Außenumfangsoberfläche (2, 2a, 2b) und eines innenseitigen Eingriffsabschnitts, der auf zumindest einem Teil der Außenumfangsoberfläche (2, 2a, 2b) ausgebildet ist, wobei das Verfahren Folgendes umfasst:
einen Schritt des Durchführens einer Bearbeitung zum Ausbilden des innenseitigen Eingriffsabschnitts auf der Außenumfangsoberfläche (2, 2a, 2b) in einem Zustand, in dem zumindest ein axialer Zwischenabschnitt des gelagerten Oberflächenabschnitts (9a, 9b, 9c, 9d, 9e, 9f) eines Wellenelements (1, 1a, 1b, 1c, 1d, 1e) nach Anspruch 9 gegen eine verjüngte Oberfläche (35), die auf einer Spannvorrichtung (13, 13a, 13b) bereitgestellt ist, gedrückt wird, und Schmierfett in der vertieften Rille (26) bereitgestellt ist.

17. Verfahren zur Herstellung einer Innenwelle (11) nach Anspruch 15 oder 16, wobei
die Bearbeitung zum Ausbilden des innenseitigen Eingriffsabschnitts eine Walzbearbeitung ist.

18. Verfahren zur Herstellung einer Innenwelle (11) nach einem der Ansprüche 15 bis 17, wobei der innenseitige Eingriffsabschnitt ein Außengewindeabschnitt (4) ist, in dem eine Schraubrille (8) mit Außengewinde spiralförmig ausgebildet ist.

19. Verfahren zur Herstellung einer Innenwelle (11) nach einem der Ansprüche 15 bis 18, das ferner Folgendes umfasst:
einen Wärmebehandlungsschritt zum Durchführen einer Wärmebehandlung der Innenwelle (11), wobei die Innenwelle (11) nach dem Wärmebehandlungsschritt nicht weiter bearbeitet wird.

## Revendications

1. Élément d'arbre (1, 1a, 1b, 1c, 1d, 1e) comprenant :
une surface périphérique externe (2, 2a, 2b) ;
au moins une surface latérale axiale (3a, 3b) faisant face à une direction axiale ;
une partie chanfreinée (7a, 7b, 7c, 7d, 7e, 7f) formée au niveau d'une partie de raccordement entre un bord d'extrémité axiale (5a, 5b, 5c) de la surface périphérique externe (2, 2a, 2b) et un bord périphérique externe (6a, 6b, 6c) de la surface latérale axiale ; et
une partie cible de traitement (12) formée sur au moins une partie de la surface périphérique externe (2, 2a, 2b),
dans lequel :
la partie chanfreinée (7a, 7b, 7c, 7d, 7e, 7f) comprend au moins une partie de surface supportée (9a, 9b, 9c, 9d, 9e, 9f) disposée au niveau d'une partie axialement intermédiaire de la partie chanfreinée (7a, 7b, 7c, 7d, 7e, 7f) et radialement inclinée vers l'extérieur au fur et à mesure qu'elle se rapproche de la partie cible de traitement dans la direction axiale, et
une partie de surface inclinée de raccordement (10a1,
10a2, 10b1, 10b2, 10c1, 10c2) ou un gradin (18a, 18b, 17c, 18d, 18e, 18f, 18g) de la partie chanfreinée (7a, 7b, 7c, 7d, 7e, 7f) raccorde un bord d'extrémité axiale de la partie de surface supportée (9a, 9b, 9c, 9d, 9e, 9f) avec le bord d'extrémité axiale (5a, 5b, 5c) de la surface périphérique externe (2, 2a, 2b) ou le bord périphérique externe (6a, 6b, 6c) de la surface latérale axiale,
l'élément d'arbre (1, 1a, 1b, 1c, 1d, 1e) étant **caractérisé en ce que** :
le bord d'extrémité axiale (5a, 5b, 5c) de la surface périphérique externe (2, 2a, 2b) et le bord périphérique externe (6a, 6b, 6c) de la surface latérale axiale sont positionnés radialement vers l'intérieur d'une ligne tangente au niveau d'une partie axialement intermédiaire de la partie de surface supportée (9a, 9b, 9c, 9d, 9e, 9f), dans une section transversale dans la direction axiale,
la partie de surface inclinée de raccordement (10a1, 10a2, 10b1, 10b2, 10c1, 10c2) ou la partie de gradin (18a, 18b, 18c, 18d, 18e, 18f, 18g) est configurée pour absorber l'allongement de l'élément d'arbre (1, 1a, 1b, 1c, 1d, 1e) lorsque la partie de surface supportée (9a, 9b, 9c, 9d, 9e, 9f) est comprimée dans la direction radiale,
dans lequel la partie de surface inclinée de raccordement (10a1, 10a2, 10b1, 10b2, 10c1, 10c2) est une surface courbée convexe ayant une génératrice en forme d'arc inclinée radialement vers l'extérieur au fur et à mesure qu'elle se rapproche de l'autre côté axial.

2. Élément d'arbre (1, 1a, 1b, 1c, 1d, 1e) selon la revendication 1, dans lequel la partie de surface supportée (9a, 9b, 9c, 9d, 9e, 9f) est une surface conique ayant une génératrice linéaire.

3. Élément d'arbre (1, 1a, 1b, 1c, 1d, 1e) selon la revendication 1, dans lequel la partie de surface supportée (9a, 9b, 9d, 9e, 9f) est une surface courbée convexe ayant une génératrice en forme d'arc.

4. Élément d'arbre (1, 1a, 1b, 1c, 1d, 1e) selon l'une quelconque des revendications 1 à 3, dans lequel la partie chanfreinée (7a, 7b, 7c, 7d, 7e, 7f) comprend en outre :
une première partie de surface inclinée de raccordement (10a2, 10b2, 10c2) qui raccorde un bord d'extrémité axiale sur un côté axialement proche de la partie cible de traitement (12) dans les deux bords d'extrémité axiale de la partie de surface supportée (9a, 9b, 9c, 9d, 9e, 9f) et le bord d'extrémité axiale (5a, 5b, 5c) de la surface périphérique externe (2, 2a, 2b) et qui est inclinée radialement vers l'extérieur au fur et à mesure qu'elle se rapproche de la partie cible de traitement (12) dans la direction axiale, ou bien
la première partie de gradin (18b, 18d, 18g) qui a une partie de surface plate en forme d'anneau circulaire (19b, 19d, 19f) radialement pliée vers l'intérieur au moins à partir du bord d'extrémité axiale (5a, 5b, 5c) de la surface périphérique externe (2, 2a, 2b).

5. Élément d'arbre (1, 1a, 1b, 1c, 1d, 1e) selon l'une quelconque des revendications 1 à 3, dans lequel la partie chanfreinée (7a, 7b, 7c, 7d, 7e, 7f) comprend en outre :
une partie de surface inclinée de raccordement (10a1, 10b1, 10c1) qui raccorde un bord d'extrémité axiale sur un côté axialement éloigné de la partie cible de traitement (12) dans les deux bords d'extrémité axiale de la partie de surface supportée (9a, 9b, 9c, 9d, 9e, 9f) et le bord périphérique externe (6a, 6b) de la surface latérale axiale (3a, 3b) et qui est radialement inclinée vers l'extérieur au fur et à mesure qu'elle se rapproche de la partie cible de traitement (12) dans la direction axiale, ou bien
une partie de gradin (18a, 18c, 18e) qui a une partie de surface cylindrique (20a, 20c, 20d) pliée au moins à partir du bord périphérique externe (6a, 6b) de la surface latérale axiale (3a) dans une direction se rapprochant de la partie cible de traitement (12) dans la direction axiale.

6. Élément d'arbre (1, 1a, 1b, 1c, 1d, 1e) selon la revendication 4, dans lequel la partie chanfreinée (7a, 7b, 7c, 7d, 7e, 7f) comprend en outre :
une seconde partie de surface inclinée de raccordement (10a1, 10b1, 10c1) qui raccorde un bord d'extrémité axiale sur un côté axialement éloigné de la partie cible de traitement (12) dans les deux bords d'extrémité axiale de la partie de surface supportée (9a, 9b, 9c, 9d, 9e, 9f) et le bord périphérique externe (6a, 6b) de la surface latérale axiale (3a, 3b) et qui est inclinée radialement vers l'extérieur au fur et à mesure qu'elle se rapproche de la partie cible de traitement (12) dans la direction axiale, ou bien
une deuxième partie de gradin (18a, 18c, 18e) qui a une partie de surface cylindrique (20a, 20c, 20d) pliée au moins à partir du bord périphérique externe (6a, 6b) de la surface latérale axiale (3a) dans une direction se rapprochant de la partie cible de traitement (12) dans la direction axiale.

7. Élément d'arbre (1, 1a, 1b, 1c, 1d, 1e) selon l'une quelconque des revendications 1 à 6, dans lequel :
la partie chanfreinée (7a, 7b, 7c, 7d, 7e, 7f) comprend une paire de parties de surface supportées (9d, 9e) et la paire de parties de surface supportées (9d, 9e) sont raccordées entre elles par une troisième partie de gradin (18f) comprenant une partie de surface plate en forme d'anneau circulaire (19e) et une partie de surface cylindrique (20e).

8. Élément d'arbre (1, 1a, 1b, 1c, 1d, 1e) selon l'une quelconque des revendications 1 à 7, dans lequel la surface latérale axiale est une surface d'extrémité axiale (3a, 3b) .

9. Élément d'arbre (1, 1a, 1b, 1c, 1d, 1e) selon l'une quelconque des revendications 1 à 8, dans lequel :
une partie cylindrique étagée (22), dans laquelle une partie cylindrique de petit diamètre (23) et une partie cylindrique de grand diamètre (24) sont raccordées entre elles par une surface de gradin (25) faisant face à la direction axiale, est prévue au niveau d'une partie sur la surface périphérique externe (2, 2a, 2b) qui est déviée de la partie cible de traitement (12) dans la direction axiale, et
la surface latérale axiale est la surface de gradin (25).

10. Élément d'arbre (1, 1a, 1b, 1c, 1d, 1e) selon la revendication 9, dans lequel :
une rainure évidée (26) évidée radialement vers l'intérieur est prévue dans une partie d'extrémité de la partie cylindrique de petit diamètre (23) qui est sur un côté proche de la partie cylindrique de grand diamètre (24) dans la direction axiale.

11. Élément d'arbre (1, 1a, 1b, 1c, 1d, 1e) selon l'une quelconque des revendications 1 à 10, dans lequel l'élément d'arbre (1, 1a, 1b, 1c, 1d, 1e) est utilisé en tant qu'arbre à vis pour un actionneur de frein (200).

12. Élément d'arbre (1, 1a, 1b, 1c, 1d, 1e) selon l'une quelconque des revendications 1 à 11, dans lequel :
une paire de parties chanfreinées (7a, 7b, 7c, 7d, 7e, 7f) sont formées au niveau de la partie de raccordement entre les extrémités axiales de la surface périphérique externe (2, 2a, 2b) et le bord périphérique externe (6a, 6b, 6c) des deux surfaces latérales axiales de l'élément d'arbre (1),
la longueur de la partie de surface supportée (9a, 9b, 9c, 9d, 9e, 9f) de l'une de la paire de parties chanfreinées (7a, 7b, 7c, 7d, 7e, 7f) est plus longue que la longueur de la partie de surface supportée (9a, 9b, 9c, 9d, 9e, 9f) de l'autre de la paire de parties chanfreinées (7a, 7b, 7c, 7d, 7e, 7f).

13. Élément d'arbre (1, 1a, 1b, 1c, 1d, 1e) selon la revendication 12, dans lequel :
l'une de la paire de parties chanfreinées (7a, 7b, 7c, 7d, 7e, 7f) comprend :
une première partie de surface inclinée de raccordement (10a2, 10b2, 10c2) raccordant des bords d'extrémité axiale des deux extrémités axiales de la partie de surface supportée (9a, 9b, 9c, 9d, 9e, 9f) qui sont proches de la partie cible de traitement (12) par rapport à la direction axiale et le bord d'extrémité axiale (5a, 5b, 5c) de la surface périphérique externe (2, 2a, 2b) et inclinée dans une direction qui se déplace vers l'extérieur dans la direction radiale au fur et à mesure qu'elle se rapproche de la partie cible de traitement (12) dans la direction axiale ; et
une seconde partie de surface inclinée de raccordement (10a1, 10b1, 10c1) raccordant les bords d'extrémité axiale des deux extrémités de la partie de surface supportée (9a, 9b, 9c, 9d, 9e, 9f) qui sont plus éloignés de la partie cible de traitement (12) dans la direction axiale vers le bord périphérique externe (6a, 6b, 6c) du côté axial, et est inclinée dans une direction qui se déplace vers l'extérieur dans la direction radiale au fur et à mesure qu'elle se rapproche de la partie cible de traitement (12) dans la direction axiale, et
dans l'une de la paire de parties chanfreinées (7a, 7b, 7c, 7d, 7e, 7f), une dimension axiale (d₁₀ₐ₂, d_{10b2}) de la première partie de surface inclinée de raccordement (10a2, 10b2, 10c2) est égale à la dimension axiale (d₁₀ₐ₁, d_{10b1}) de la seconde partie de surface inclinée de raccordement (10a1, 10b1, 10c1).

14. Élément d'arbre (1, 1a, 1b, 1c, 1d, 1e) selon la revendication 12 ou 13, dans lequel :
l'autre de la paire de parties chanfreinées (7a, 7b, 7c, 7d, 7e, 7f) comprend :
une première partie de surface inclinée de raccordement (10a2, 10b2, 10c2) raccordant des bords d'extrémité axiale des deux extrémités axiales de la partie de surface supportée (9a, 9b, 9c, 9d, 9e, 9f) qui sont proches de la partie cible de traitement (12) par rapport à la direction axiale et le bord d'extrémité axiale (5a, 5b, 5c) de la surface périphérique externe (2, 2a, 2b) et inclinée dans une direction qui se déplace vers l'extérieur dans la direction radiale au fur et à mesure qu'elle se rapproche de la partie cible de traitement (12) dans la direction axiale ; et
une seconde surface inclinée de raccordement (10a1, 10b1, 10c1) raccordant les bords d'extrémité axiale des deux extrémités de la partie de surface supportée (9a, 9b, 9c, 9d, 9e, 9f) qui sont plus éloignés de la partie cible de traitement (12) dans la direction axiale et le bord périphérique externe (6a, 6b, 6c) du côté axial, et est inclinée dans une direction qui se déplace vers l'extérieur dans la direction radiale au fur et à mesure qu'elle se rapproche de la partie cible de traitement (12) dans la direction axiale, et
dans l'autre de la paire de parties chanfreinées (7a, 7b, 7c, 7d, 7e, 7f), une dimension axiale (d₁₀ₐ₂, d_{10b2}) de la première partie de surface inclinée de raccordement (10a1, 10b1, 10c1) est supérieure à la dimension axiale (d₁₀ₐ₁, d_{10b1}) de la seconde partie de surface inclinée de raccordement (10a2, 10b2, 10c2).

15. Procédé pour fabriquer un arbre mâle (11) comprenant une surface périphérique externe (2, 2a, 2b) et une partie de mise en prise du côté mâle formée sur au moins une partie de la surface périphérique externe (2, 2a, 2b), le procédé comprenant :
une étape pour réaliser le traitement afin de former la partie de mise en prise du côté mâle sur la surface périphérique externe (2, 2a, 2b) dans un état dans lequel l'élément d'arbre (1, 1a, 1b, 1c, 1d, 1e) selon l'une quelconque des revendications 1 à 13, est positionné dans une direction radiale en comprimant au moins une partie axialement intermédiaire de la partie de surface supportée (9a, 9b, 9c, 9d, 9e, 9f) de l'élément d'arbre (1, 1a, 1b, 1c, 1d, 1e) contre une surface progressivement rétrécie (35) prévue sur un gabarit (13, 13a, 13b).

16. Procédé pour fabriquer un arbre mâle (11) comprenant une surface périphérique externe (2, 2a, 2b), et une partie de mise en prise du côté mâle formée sur au moins une partie de la surface périphérique externe (2, 2a, 2b), le procédé comprenant :
une étape pour réaliser le traitement afin de former la partie de mise en prise du côté mâle sur la surface périphérique externe (2, 2a, 2b) dans un état dans lequel au moins une partie axialement intermédiaire de la partie de surface supportée (9a, 9b, 9c, 9d, 9e, 9f) de l'élément d'arbre (1, 1a, 1b, 1c, 1d, 1e) selon la revendication 9, est comprimée contre une surface progressivement rétrécie (35) prévue sur un gabarit (13, 13a, 13b) et la graisse est maintenue dans la rainure évidée (26).

17. Procédé pour fabriquer un arbre mâle (11) selon la revendication 15 ou 16, dans lequel :
le traitement pour former la partie de mise en prise du côté mâle est un traitement par laminage.

18. Procédé pour fabriquer un arbre mâle (11) selon l'une quelconque des revendications 15 à 17, dans lequel la partie de mise en prise du côté mâle est une partie de vis mâle (4) dans laquelle une rainure de vis mâle (8) est formée en spirale.

19. Procédé pour fabriquer un arbre mâle (11) selon l'une quelconque des revendications 15 à 18, comprenant en outre :
une étape de traitement thermique pour réaliser un traitement thermique sur l'arbre mâle (11), dans lequel l'arbre mâle (11) n'est pas traité après l'étape de traitement thermique.
